# EUROPEAN PATENT SPECIFICATION

(11) **EP 1 665 868 B1**
(45) Date of publication and mention of the grant of the patent: **13.07.2011**
(21) Application number: 04784736.3
(22) Date of filing: 22.09.2004
(51) Int. Cl.: H04Q 11/00

(54) **METHOD AND SYSTEM TO RECOVER OPTICAL BURST SWITCHED NETWORK RESOURCES UPON DATA BURST LOSS**
VERFAHREN UND SYSTEM ZUR WIEDERGEWINNUNG VON BETRIEBSMITTELN EINES OPTISCHEN BURST-VERMITTELTEN NETZWERKS BEI DATEN-BURST-VERLUSTEN
PROCEDE ET SYSTEME POUR LA RECUPERATION DE RESSOURCES EN CAS DE PERTE DE RAFALE DE DONNEES DANS DES RESEAUX A MULTIPLEXAGE PAR REPARTITION EN LONGUEUR D'ONDE (MRL) A COMMUTATION OPTIQUE

(30) Priority: 23.09.2003 US 668874
(43) Date of publication of application: 07.06.2006
(73) Proprietor: Intel Corporation, Santa Clara, CA 95052 (US)
(72) Inventor: OVADIA, Shlomo, San Jose, CA 95125 (US); MACIOCCO, Christian, Tigard, OR 97223 (US)
(74) Representative: Want, Clifford James
(86) International application number: PCT/US2004/030994
(87) International publication number: WO 2005/032204

(56) References cited:
- EP-A- 1 122 971
- US-A1- 2002 109 878
- QIAO C ET AL: "POLYMORPHIC CONTROL FOR COST-EFFECTIVE DESIGN OF OPTICAL NETWORKS" EUROPEAN TRANSACTIONS ON TELECOMMUNICATIONS, EUREL PUBLICATION, MILANO, IT, vol. 11, no. 1, January 2000 (2000-01), pages 17-26, XP000949612 ISSN: 1124-318X
- BALDINE I ET AL: "JUMPSTART: A JUST-IN-TIME SIGNALING ARCHITECTURE FOR WDM BURST-SWITCHED NETWORKS" IEEE COMMUNICATIONS MAGAZINE, IEEE SERVICE CENTER. PISCATAWAY, N.J, US, vol. 40, no. 2, February 2002 (2002-02), pages 82-89, XP001125422 ISSN: 0163-6804

## Description

### FIELD OF THE INVENTION

An embodiment of the present invention relates to optical networks in general; and, more specifically, to techniques for recovering resources in response to detection of resource unavailability within optical-switched networks.

### BACKGROUND INFORMATION

Transmission bandwidth demands in telecommunication networks (e.g., the Internet) appear to be ever increasing and solutions are being sought to support this bandwidth demand. One solution to this problem is to use fiber-optic networks, where wavelength-division-multiplexing (WDM) technology is used to support the ever-growing demand in optical networks for higher data rates.

Conventional optical switched networks typically use wavelength routing techniques, which require that optical-electrical-optical (O-E-O) conversion of optical signals be done at the optical switching node. O-E-O conversion at each switching node in the optical network is not only a very slow operation (typically about ten milliseconds), but it is a very costly, power-consuming operation that potentially creates a traffic bottleneck for the optical switched network. In addition, the current optical switch technologies cannot efficiently support "bursty" traffic that is often experienced in packet communication applications (e.g., the Internet).

A large enterprise data network can be implemented using many sub-networks. For example, a large enterprise network to support data traffic can be segmented into a large number of relatively small access networks, which are coupled to a number of local-area networks (LANs). The enterprise network is also coupled to metropolitan area networks (Optical MANs), which are in turn coupled to a large "backbone" wide area network (WAN). The optical MANs and WANs typically require a higher bandwidth than LANs in order to provide an adequate level of service demanded by their high-end users. However, as LAN speeds/bandwidth increase with improved technology, there is a need for increasing MAN/WAN speeds/bandwidth.

Recently, optical burst switching (OBS) scheme has emerged as a promising solution to support high-speed bursty data traffic over WDM optical networks. The OBS scheme offers a practical opportunity between the current optical circuit-switching and the emerging all optical packet switching technologies, It has been shown that under certain conditions, the OBS scheme achieves high-bandwidth utilization and class-of-service (CoS) by elimination of electronic bottlenecks as a result of the O-E-O conversion occurring at switching nodes, and by using one-way end-to-end bandwidth reservation scheme with variable time slot duration provisioning scheduled by the ingress nodes. Optical switching fabrics are attractive because they offer at least one or more orders of magnitude lower power consumption with a smaller form factor than comparable O-E-O switches. However, most of the recently published work on OBS networks focuses on the next-generation backbone data networks (i.e. Internet-wide network) using high capacity (i.e., 1 Tb/s) WDM switch fabrics with large number of input/output ports (i.e., 256x256), optical channels (i.e., 40 wavelengths), and requiring extensive buffering. Thus, these WDM switches tend to be complex, bulky, and very expensive to manufacture. In contrast, there is a growing demand to support a wide variety of bandwidth-demanding applications such as storage area networks (SANs) and multimedia multicast at a low cost for both LAN/WAN networks.
EP 1122971 discloses data channel reservation in optical burst-switched networks in which a data channel is reserved by transmitting a data channel reservation request from an ingress edge router to a reservation termination node. The data channel request is processed at the reservation termination node and an acknowledgement transmitted from the reservation termination node to the ingress edge router. The data channel path is reserved once a reserve data channel bit reaches the reservation termination node. A data channel can therefore be in an unreserved state, a "reservation in progress state" or be reserved. In the unreserved state and in the reservation in progress state the channel is used for normal unreserved communication in a hop by hop mode. If no unreserved outbound data channel is found or a router in the path decides not to continue the path setup process, the router sends a negative acknowledgement back to the ingress edge router so that the attempt to set up a reserved channel fails. Meanwhile no bandwidth is wasted during the attempt to set up a data channel reservation because the channel is used in a normal manner during the setting up period.

### SUMMARY OF THE INVENTION

According to a first aspect of the invention, there is provided a switching node apparatus as claimed in claim 1.

According to a second aspect of the invention, there is provided a method as claimed in claim 11

According to a third aspect of the invention, there is provided a machine-readable medium as claimed in claim 29.

Further embodiments of the invention are included in the dependent claims.

### BRIEF DESCRIPTION OF THE DRAWINGS

Non-limiting and non-exhaustive embodiments of the present invention are described with reference to the following figures, wherein like reference numerals refer to like parts throughout the various views unless otherwise specified.

Figure 1 is a simplified block diagram illustrating a photonic burst-switched (PBS) network with variable time slot provisioning, according to one embodiment of the present invention.

Figure 2 is a simplified flow diagram illustrating the operation of a photonic burst-switched (PBS) network, according to one embodiment of the present invention.

Figure 3 is a block diagram illustrating a switching node module for use in a photonic burst-switched (PBS) network, according to one embodiment of the present invention.

Figure 4a is a diagram illustrating the format of an optical data burst for use in a photonic burst-switched network, according to one embodiment of the present invention.

Figure 4b is a diagram illustrating the format of an optical control burst for use in a photonic burst-switched network, according to one embodiment of the present invention.

Figure 5 is a flow diagram illustrating the operation of a switching node module, according to one embodiment of the present invention.

Figure 6 is a diagram illustrating a generalized multi-protocol label switching (GMPLS)-based architecture for a PBS network, according to one embodiment of the present invention.

Figure 7 is a diagram illustrating PBS optical burst flow between nodes in a PBS network, according to one embodiment of the present invention.

Figure 8 is a diagram illustrating generic PBS framing format for PBS optical bursts, according to one embodiment of the present invention.

Figure 9 is a diagram illustrating further details of the PBS framing format of Figure 8, according to one embodiment of the present invention.

Figure 10 is a schematic diagram illustrating an exemplary PBS network used to illustrate a resource recovery process, according to one embodiment of the present invention.

Figure 11 is a flowchart illustration operations performed in connection with a resource reservation and resource recovery process, according to one embodiment of the present invention.

Figure 12 is a diagram of an exemplary resource reservation table, according to one embodiment of the present invention.

Figure 13a is a diagram illustrating an extended PBS burst header that may be used in a resource cancellation PBS control burst, according to one embodiment of the present invention.

Figure 13b shows details of exemplary extended header data that may be stored in the PBS burst header of Figure 13a.

Figure 13c shows exemplary commands and corresponding command codes that may be stored in the command field of the extended PBS burst header of Figure 13a.

Figure 14 is a block diagram illustrating a GMPLS-based PBS label format, according to one embodiment of the present invention.

Figure 15 is a flowchart illustration the various operations performed in connection with the transmission and processing of control bursts, according to one embodiment of the present invention.

Figure 16 is a flowchart illustrating operations and logic performed during generation and processing of a resource cancellation message using a GMPLS-based PBS label, according to one embodiment of the present invention.

Figure 17 is a flowchart illustrating operations and logic performed during generation and processing of a resource cancellation message using a lightpath reservation identifier, according to one embodiment of the present invention.

Figure 18 is a schematic diagram of a PBS switching node architecture, according to one embodiment of the invention.

### DETAILED DESCRIPTION OF PREFERRED EMBODIMENTS

In the following detailed descriptions, embodiments of the invention are disclosed with reference to their use in a photonic burst-switched (PBS) network. A PBS network is a type of optical-switched network, typically comprising a high-speed hop and span-constrained network, such as an enterprise network. The term "photonic burst" is used herein to refer to statistically-multiplexed packets (*e.g*., Internet protocol (IP) packets, Ethernet frames, Fibre Channel frames) having similar routing requirements. Although conceptually similar to backbone-based OBS networks, the design, operation, and performance requirements of these high-speed hop and span-constrained networks may be different. However, it will be understood that the teaching and principles disclosed herein may be applicable to other types of optical switched networks as well.

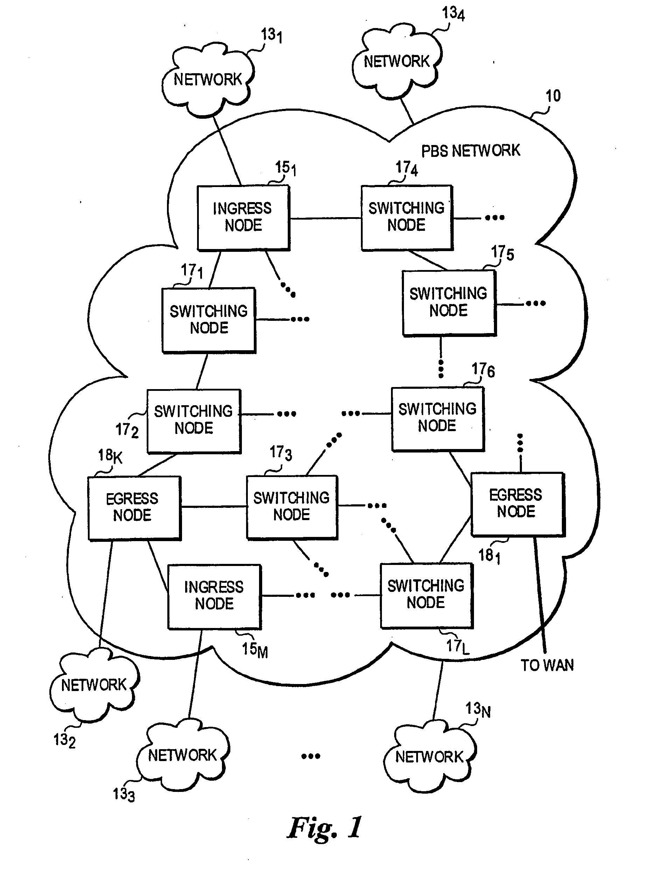

Figure 1 illustrates an exemplary photonic burst-switched (PBS) network 10 in which embodiments of the invention described herein may be implemented. A PBS network is a type of optical switched network. This embodiment of PBS network 10 includes local area networks (LANs) 13₁-13_{N} and a backbone optical WAN (not shown). In addition, this embodiment of PBS network 10 includes ingress nodes 15₁-15_{M}, switching nodes 17₁-17_{L}, and egress nodes 18₁-18_{K}. PBS network 10 can include other ingress, egress and switching nodes (not shown) that are interconnected with the switching nodes shown in Figure 1. The ingress and egress nodes are also referred to herein as edge nodes in that they logically reside at the edge of the PBS network. The edge nodes, in effect, provide an interface between the aforementioned "external" networks (*i.e*., external to the PBS network) and the switching nodes of the PBS network. In this embodiment, the ingress, egress and switching nodes are implemented with intelligent modules. This embodiment can be used, for example, as a metropolitan area network connecting a large number of LANs within the metropolitan area to a large optical backbone network.

In some embodiments, the ingress nodes perform optical-electrical (O-E) conversion of received optical signals, and include electronic memory to buffer the received signals until they are sent to the appropriate LAN/WAN. In addition, in some embodiments, the ingress nodes also perform electrical-optical (E-O) conversion of the received electrical signals before they are transmitted to switching nodes 17₁-17_{M} of PBS network 10.

Egress nodes are implemented with optical switching units or modules that are configured to receive optical signals from other nodes of PBS network 10 and route them to the optical WAN or other external networks. Egress nodes can also receive optical signals from the optical WAN or other external network and send them to the appropriate node of PBS network 10. In one embodiment, egress node 18₁ performs O-E-O conversion of received optical signals, and includes electronic memory to buffer received signals until they are sent to the appropriate node of PBS network 10 (or to the optical WAN).

Switching nodes 17₁-17_{L} are implemented with optical switching units or modules that are each configured to receive optical signals from other switching nodes and appropriately route the received optical signals to other switching nodes of PBS network 10. As is described below, the switching nodes perform O-E-O conversion of optical control bursts and network management control burst signals. In some embodiments, these optical control bursts and network management control bursts are propagated only on preselected wavelengths. The preselected wavelengths do not propagate optical "data" bursts (as opposed to control bursts and network management control bursts) signals in such embodiments, even though the control bursts and network management control bursts may include necessary information for a particular group of optical data burst signals. The control and data information is transmitted on separate wavelengths in some embodiments (also referred to herein as out-of-band (OOB) signaling). In other embodiments, control and data information may be sent on the same wavelengths (also referred to herein as in-band (IB) signaling). In another embodiment, optical control bursts, network management control bursts, and optical data burst signals may be propagated on the same wavelength(s) using different encoding schemes such as different modulation formats, etc. In either approach, the optical control bursts and network management control bursts are sent asynchronously relative to its corresponding optical data burst signals. In still another embodiment, the optical control bursts and other control signals are propagated at different transmission rates as the optical data signals.

Although switching nodes 17₁-17_{L} may perform O-E-O conversion of the optical control signals, in this embodiment, the switching nodes do not perform O-E-O conversion of the optical data burst signals. Rather, switching nodes 17₁-17_{L} perform purely optical switching of the optical data burst signals. Thus, the switching nodes can include electronic circuitry to store and process the incoming optical control bursts and network management control bursts that were converted to an electronic form and use this information to configure photonic burst switch settings, and to properly route the optical data burst signals corresponding to the optical control bursts. The new control bursts, which replace the previous control bursts based on the new routing information, are converted to an optical control signal, and it is transmitted to the next switching or egress nodes. Embodiments of the switching nodes are described further below.

Elements of exemplary PBS network 10 are interconnected as follows. LANs 13₁-13_{N} are connected to corresponding ones of ingress nodes 15₁-15_{M}. Within PBS network 10, ingress nodes 15₁-15_{M} and egress nodes 18₁-18_{K} are connected to some of switching nodes 17₁-17_{L} via optical fibers. Switching nodes 17₁-17_{L} are also interconnected to each other via optical fibers in mesh architecture to form a relatively large number of lightpaths or optical links between the ingress nodes, and between ingress nodes 15₁-15_{L} and egress nodes 18₁-18_{K}. Ideally, there are more than one lightpath to connect the switching nodes 17₁-17_{L} to each of the endpoints of PBS network 10 *(i.e.,* the ingress nodes and egress nodes are endpoints within PBS network 10). Multiple lightpaths between switching nodes, ingress nodes, and egress nodes enable protection switching when one or more node fails, or can enable features such as primary and secondary route to destination.

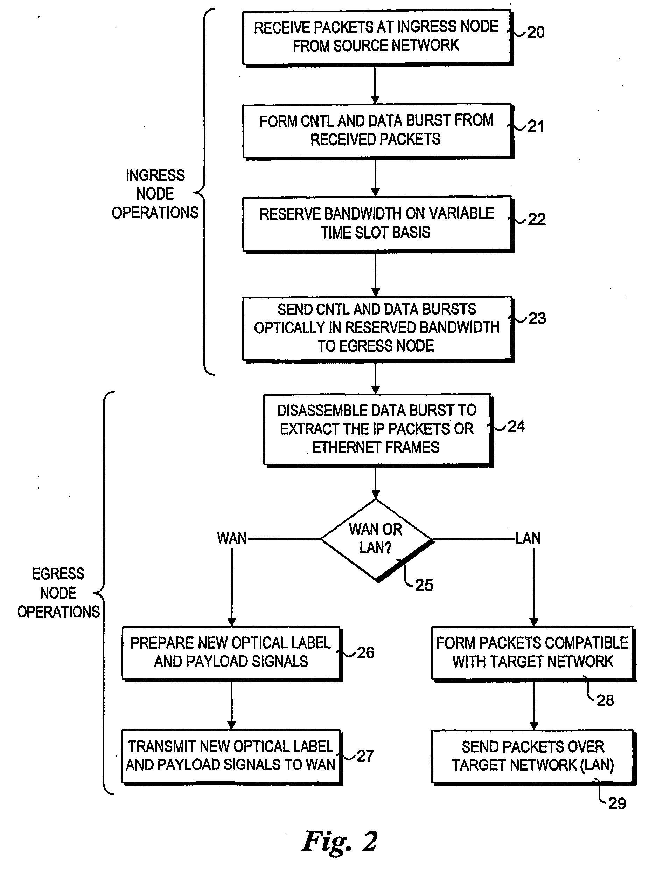

As described below in conjunction with Figure 2, the ingress, egress and switching nodes of PBS network 10 are configured to send and/or receive optical control bursts, optical data burst, and other control signals that are wavelength multiplexed so as to propagate the optical control bursts and control labels on pre-selected wavelength(s) and optical data burst or payloads on different preselected wavelength(s). Still further, the edge nodes of PBS network 10 can send optical control burst signals while sending data out of PBS network 10 (either optical or electrical).

Figure 2 illustrates the operational flow of PBS network 10, according to one embodiment of the present invention. Referring to Figures 1 and 2, photonic burst switching network 10 operates as follows.

The process begins in a block 20, wherein PBS network 10 receives packets from LANs 13₁-13_{N}. In one embodiment, PBS network 10 receives IP packets at ingress nodes 15₁-15_{M}. The received packets can be in electronic form rather than in optical form, or received in optical form and then converted to electronic form. In this embodiment, the ingress nodes store the received packets electronically.

For clarity, the rest of the description of the operational flow of PBS network 10 focuses on the transport of information from ingress node 15₁ to egress node 18₁. The transport of information from ingress nodes 15₂-15_{M} to egress node 18₁ (or other egress nodes) is substantially similar.

An optical burst label (*i.e*., an optical control burst) and optical payload (*i.e*., an optical data burst) is formed from the received packets, as depicted by a block 21. In one embodiment, ingress node 15, uses statistical multiplexing techniques to form the optical data burst from the received IP (Internet Protocol) packets stored in ingress node 15₁. For example, packets received by ingress node 15₁ and having to pass through egress node 18₁ on their paths to a destination can be assembled into an optical data burst payload.

Next, in a block 22, Bandwidth on a specific optical channel and/or fiber is reserved to transport the optical data burst through PBS network 10. In one embodiment, ingress node 15₁ reserves a time slot *(i.e.,* a time slot of a TDM system) in an optical data signal path through PBS network 10. This time slot maybe fixed-time duration and/or variable-time duration with either uniform or non-uniform timing gaps between adjacent time slots. Further, in one embodiment, the bandwidth is reserved for a time period sufficient to transport the optical burst from the ingress node to the egress node. For example, in some embodiments, the ingress, egress, and switching nodes maintain an updated list of all used and available time slots. The time slots can be allocated and distributed over multiple wavelengths and optical fibers. Thus, a reserved time slot (also referred to herein as a TDM channel), which in different embodiments may be of fixed-duration or variable-duration, may be in one wavelength of one fiber, and/or can be spread across multiple wavelengths and multiple optical fibers.

When an ingress and/or egress node reserves bandwidth or when bandwidth is released after an optical data burst is transported, a network controller (not shown) updates the list. In one embodiment, the network controller and the ingress or egress nodes perform this updating process using various burst or packet scheduling algorithms based on the available network resources and traffic patterns. The available variable-duration TDM channels, which are periodically broadcasted to all the ingress, switching, and egress nodes, are transmitted on the same wavelength as the optical control bursts or on a different common preselected wavelength throughout the optical network. The network controller function can reside in one of the ingress or egress nodes, or can be distributed across two or more ingress and/or egress nodes.

The optical control bursts, network management control labels, and optical data bursts are then transported through photonic burst switching network 10 in the reserved time slot or TDM channel, as depicted by a block 23. In one embodiment, ingress node 15₁ transmits the control burst to the next node along the optical label-switched path (OLSP) determined by the network controller. In this embodiment, the network controller uses a constraint-based routing protocol [*e.g*., multi-protocol label switching (MPLS)] over one or more wavelengths to determine the best available OLSP to the egress node.

In one embodiment, the control label (also referred to herein as a control burst) is transmitted asynchronously ahead of the photonic data burst and on a different wavelength and/or different fiber. The time offset between the control burst and the data burst allows each of the switching nodes to process the label and configure the photonic burst switches to appropriately switch before the arrival of the corresponding data burst. The term photonic burst switch is used herein to refer to fast optical switches that do not use O-E-O conversion.

In one embodiment, ingress node 15₁ then asynchronously transmits the optical data bursts to the switching nodes where the optical data bursts experience little or no time delay and no O-E-O conversion within each of the switching nodes. The optical control burst is always sent before the corresponding optical data burst is transmitted.

In some embodiments, the switching node may perform O-E-O conversion of the control bursts so that the node can extract and process the routing information contained in the label. Further, in some embodiments, the TDM channel is propagated in the same wavelengths that are used for propagating labels. Alternatively, the labels and payloads can be modulated on the same wavelength in the same optical fiber using different modulation formats. For example, optical labels can be transmitted using non-return-to-zero (NRZ) modulation format, while optical payloads are transmitted using return-to-zero (RZ) modulation format on the same wavelength. The optical burst is transmitted from one switching node to another switching node in a similar manner until the optical control and data bursts are terminated at egress node 18₁.

The remaining set of operations pertains to egress node operations. Upon receiving the data burst, the egress node disassembles it to extract the IP packets or Ethernet frames in a block 24. In one embodiment, egress node 18₁ converts the optical data burst to electronic signals that egress node 18₁ can process to recover the data segment of each of the packets. The operational flow at this point depends on whether the target network is an optical WAN or a LAN, as depicted by a decision block 25.

If the target network is an optical WAN, new optical label and payload signals are formed in a block 26. In this embodiment, egress node 18₁ prepares the new optical label and payload signals. The new optical label and payload are then transmitted to the target network *(i.e.,* WAN in this case) in a block 27. In this embodiment, egress node 18₁ includes an optical interface to transmit the optical label and payload to the optical WAN.

However, if in block 25 the target network is determined to be a LAN, the logic proceeds to a block 28. Accordingly, the extracted IP data packets or Ethernet frames are processed, combined with the corresponding IP labels, and then routed to the target network (*i.e*., LAN in this case). In this embodiment, egress node 18₁ forms these new IP packets. The new IP packets are then transmitted to the target network (*i.e*., LAN) as shown in block 29.

PBS network 10 can achieve increased bandwidth efficiency through the additional flexibility afforded by the TDM channels. Although this exemplary embodiment described above includes an optical MAN having ingress, switching and egress nodes to couple multiple LANs to an optical WAN backbone, in other embodiments the networks do not have to be LANs, optical MANs or WAN backbones. That is, PBS network 10 may include a number of relatively small networks that are coupled to a relatively larger network that in turn is coupled to a backbone network.

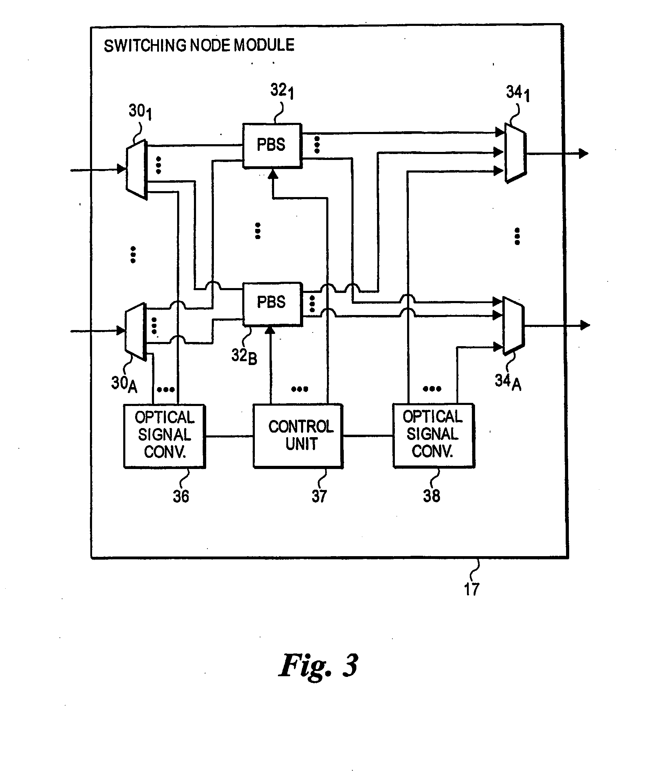

Figure 3 illustrates a module 17 for use as a switching node in photonic burst switching network 10 (Figure 1), according to one embodiment of the present invention. In this embodiment, module 17 includes a set of optical wavelength division demultiplexers 30₁-30_{A}, where A represents the number of input optical fibers used for propagating payloads, labels, and other network resources to the module. For example, in this embodiment, each input fiber could carry a set of C wavelengths (*i.e*., WDM wavelengths), although in other embodiments the input optical fibers may carry differing numbers of wavelengths. Module 17 would also include a set of *N x N* photonic burst switches 32₁-32_{B}, where *N* is the number of input/output ports of each photonic burst switch. Thus, in this embodiment, the maximum number of wavelengths at each photonic burst switch is A.C, where *N*≥*A·C*+1. For embodiments in which *N* is greater than A.C, the extra input/output ports can be used to loop back an optical signal for buffering:

Further, although photonic burst switches 32₁-32_{B} are shown as separate units, they can be implemented as *N x N* photonic burst switches using any suitable switch architecture. Module 17 also includes a set of optical wavelength division multiplexers 34₁-34_{A}, a set of optical-to-electrical signal converters 36 (*e.g*., photodetectors), a control unit 37, and a set of electrical-to-optical signal converters 38 (*e.g*., lasers). Control unit 37 may have one or more processors to execute software or firmware programs. Further details of control unit 37 are described below.

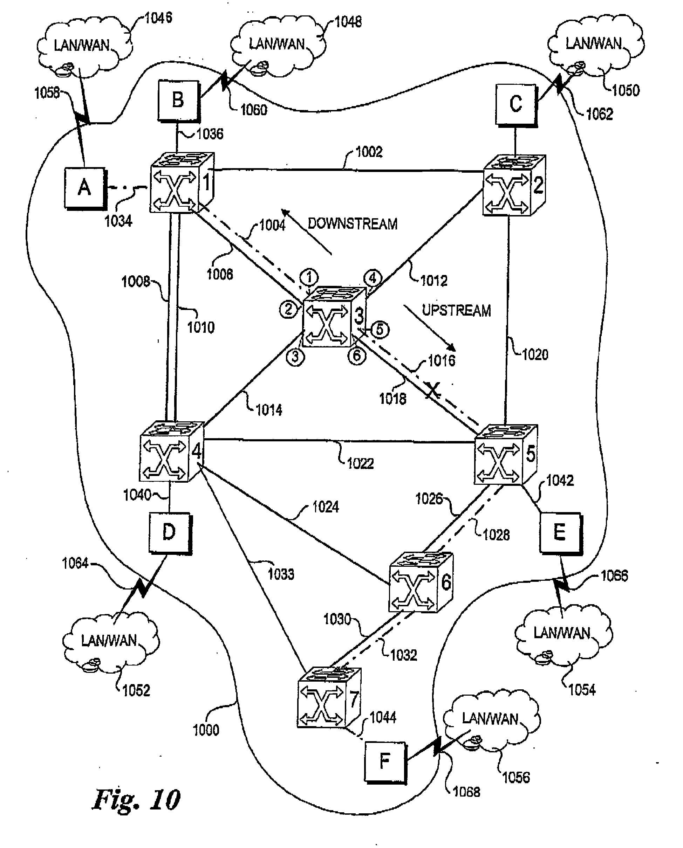

The elements of this embodiment of module 17 are interconnected as follows. Optical demultiplexers 30₁-30_{A} are connected to a set of A input optical fibers that propagate input optical signals from other switching nodes of photonic burst switching network 10 (Figure 10). The output leads of the optical demultiplexers are connected to the set of B core optical switches 32₁-32_{B} and to optical signal converter 36. For example, optical demultiplexer 30₁ has B output leads connected to input leads of the photonic burst switches 32₁-32_{B} (*i.e*., one output lead of optical demultiplexer 30₁ to one input lead of each photonic burst switch) and at least one output lead connected to optical signal converter 36.

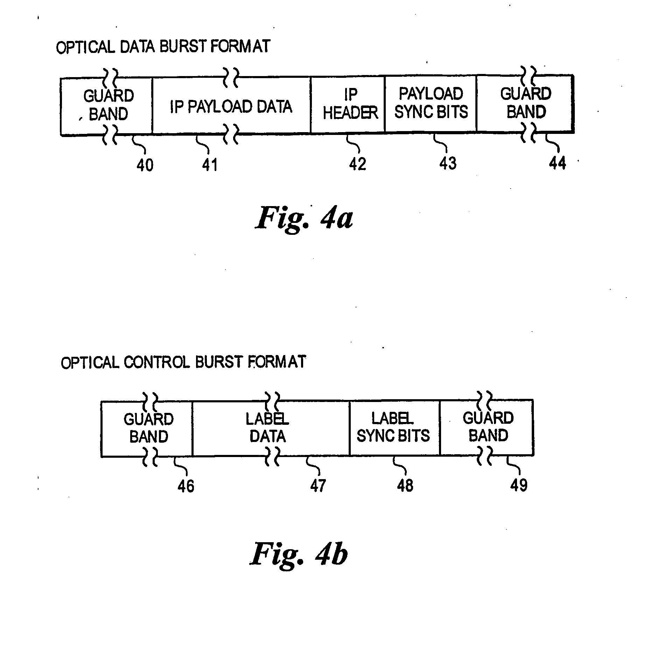

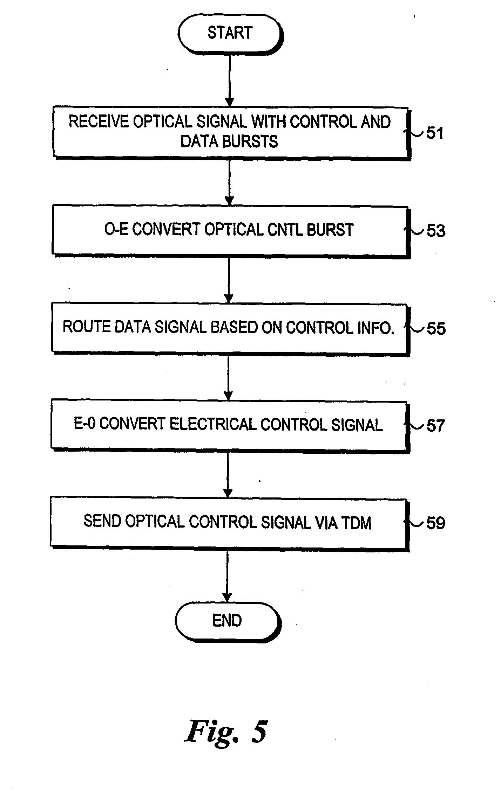

The output leads of photonic burst switches 32₁-32_{B} are connected to optical multiplexers 34₁-34_{A}. For example, photonic burst switch 32₁ has *A* output leads connected to input leads of optical multiplexers 34₁-34_{A} (*i.e*., one output lead of photonic burst switch 32₁ to one input lead of each optical multiplexer). Each optical multiplexer also an input lead connected to an output lead of electrical-to-optical signal converter 3 8. Control unit 37 has an input lead or port connected to the output lead or port of optical-to-electrical signal converter 36. The output leads of control unit 37 are connected to the control leads of photonic burst switches 32₁-32_{B} and electrical-to-optical signal converter 38. As described below in conjunction with the flow diagram of Figure 5, module 17 is used to receive and transmit optical control bursts, optical data bursts, and network management control bursts. In one embodiment, the optical data bursts and optical control bursts have transmission formats as shown in Figures 4A and 4B.

Figure 4A illustrates the format of an optical data burst for use in PBS network 10 (Figure 1), according to one embodiment of the present invention. In this embodiment, each optical data burst has a start guard band 40, an IP payload data segment 41, an IP header segment 42, a payload sync segment 43 (typically a small number of bits), and an end guard band 44 as shown in Figure 4A. In some embodiments, IP payload data segment 41 includes the statistically-multiplexed IP data packets or Ethernet frames used to form the burst. Although Figure 4A shows the payload as contiguous, module 17 transmits payloads in a TDM format. Further, in some embodiments the data burst can be segmented over multiple TDM channels. It should be pointed out that in this embodiment the optical data bursts and optical control bursts have local significance only in PBS network 10, and may loose their significance at the optical WAN.

Figure 4B illustrates the format of an optical control burst for use in photonic burst switching network 10 (Figure 1), according to one embodiment of the present invention. In this embodiment, each optical control burst has a start guard band 46, an IP label data segment 47, a label sync segment 48 (typically a small number of bits), and an end guard band 49 as shown in Figure 4B. In this embodiment, label data segment 45 contains all the necessary routing and timing information of the IP packets to form the optical burst. Although Figure 4B shows the payload as contiguous, in this embodiment module 17 transmits labels in a TDM format.

In some embodiments, an optical network management control label (not shown) is also used in PBS network 10 (Figure 1). In such embodiments, each optical network management control burst includes: a start guard band similar to start guard band 46; a network management data segment similar to data segment 47; a network management sync segment (typically a small number of bits) similar to label sync segment 48; and an end guard band similar to end guard band 44. In this embodiment, network management data segment contains network management information needed to coordinate transmissions over the network. In some embodiments, the optical network management control burst is transmitted in a TDM format.

Figure 5 illustrates the operational flow of module 17 (Figure 3), according to one embodiment of the present invention. Referring to Figures 3 and 5, module 17 operates as follows.

Module 17 receives an optical signal with TDM label and data signals. In this embodiment, module 17 receives an optical control signal (*e.g*., an optical control burst) and an optical data signal (*i.e*., an optical data burst in this embodiment) at one or two of the optical demultiplexers. For example, the optical control signal may be modulated on a first wavelength of an optical signal received by optical demultiplexer 30_{A}, while the optical data signal is modulated on a second wavelength of the optical signal received by optical demultiplexer 30_{A}. In some embodiments, the optical control signal may be received by a first optical demultiplexer while the optical data signal is received by a second optical demultiplexer. Further, in some cases, only an optical control signal (*e.g*., a network management control burst) is received. A block 51 represents this operation.

Module 17 converts the optical control signal into an electrical signal. In this embodiment, the optical control signal is the optical control burst signal, which is separated from the received optical data signal by the optical demultiplexer and sent to optical-to-electrical signal converter 36. In other embodiments, the optical control signal can be a network management control burst (previously described in conjunction with Figure 4B). Optical-to-electrical signal converter 36 converts the optical control signal into an electrical signal. For example, in one embodiment each portion of the TDM control signal is converted to an electrical signal. The electrical control signals received by control unit 37 are processed to form a new control signal. In this embodiment, control unit 37 stores and processes the information contained in the control signals. A block 53 represents this operation.

Module 17 then routes the optical data signals (*i.e*., optical data burst in this embodiment) to one of optical multiplexers 34₁-34_{A}, based on routing information contained in the control signal. In this embodiment, control unit 37 processes the control burst to extract the routing and timing information and sends appropriate PBS configuration signals to the set of B photonic burst switches 32₁-32_{B} to re-configure each of the photonic burst switches to switch the corresponding optical data bursts. A block 55 represents this operation.

Module 17 then converts the processed electrical control signal to a new optical control burst. In this embodiment, control unit 37 provides TDM channel alignment so that reconverted or new optical control bursts are generated in the desired wavelength and TDM time slot pattern. The new control burst may be modulated on a wavelength and/or time slot different from the wavelength and/or time slot of the control burst received in block 51. A block 57 represents this operation.

Module 17 then sends the optical control burst to the next switching node in the route. In this embodiment, electrical-to-optical signal generator 38 sends the new optical control burst to appropriate optical multiplexer of optical multiplexers 34₁-34_{A} to achieve the route. A block 59 represents this operation.

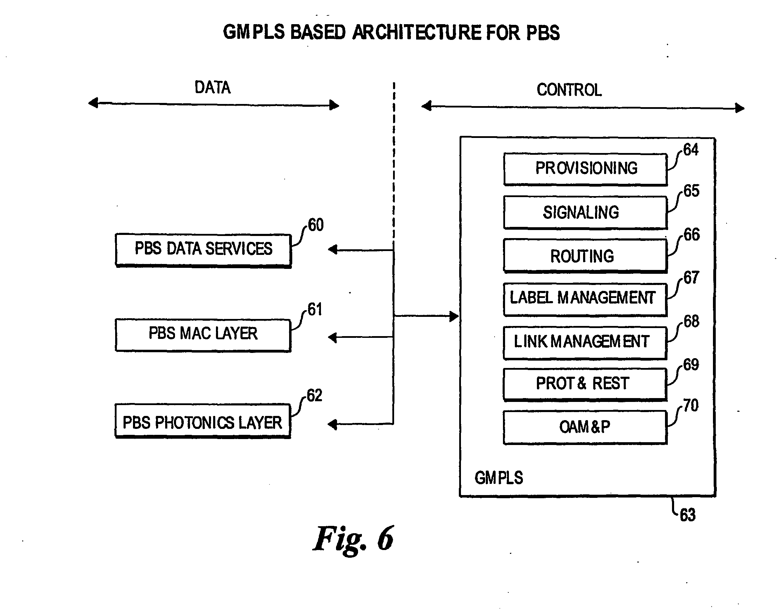

Figure 6 illustrates a GMPLS-based architecture for a PBS network, according to one embodiment of the present invention. Starting with the GMPLS suite of protocols, each of the GMPLS protocols can be modified or extended to support PBS operations and optical interfaces while still incorporating the GMPLS protocols' various traffic-engineering tasks. The integrated PBS layer architecture include PBS data services layer 60 on top of a PBS MAC layer 61, which is on top of a PBS photonics layer 62. It is well known that the GMPLS suite (indicated by a block 63 in Figure 6) includes a provisioning component 64, a signaling component 65, a routing component 66, a label management component 67, a link management component 68, and a protection and restoration component 69. In some embodiments, these components are modified or have added extensions that support the PBS layers 60-62. Further, in this embodiment, GMPLS suite 63 is also extended to include an operation, administration, management and provisioning (OAM&P) component 70.

For example, signaling component 65 can include extensions specific to PBS networks such as, for example, burst start time, burst type, burst length, and burst priority, *etc.* Link management component 68 can be implemented based on the well known link management protocol (LMP) (that currently supports only SONET/SDH networks), with extensions added to support PBS networks. Protection and restoration component 69 can, for example, be modified to cover PBS networks.

Further, for example, label management component 67 can be modified to support a PBS control channel label space. In one embodiment, the label operations are performed after control channel signals are O-E converted. The ingress nodes of the PBS network act as label edge routers (LERs) while the switching nodes act as label switch routers (LSRs). An egress node acts as an egress LER substantially continuously providing all of the labels of the PBS network. This component can advantageously increase the speed of control channel context retrieval (by performing a pre-established label look-up instead of having to recover a full context).

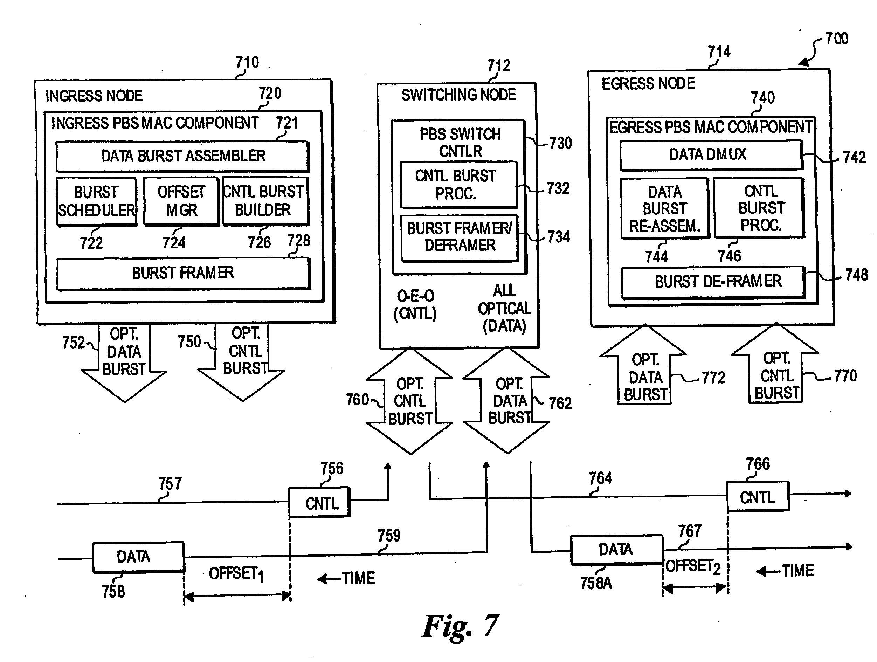

Figure 7 illustrates PBS optical burst flow between nodes in an exemplary PBS network 700, according to one embodiment of the present invention. System 700 includes ingress node 710, a switching node 712, an egress node 714 and other nodes (egress, switching, and ingress that are not shown to avoid obscuring the description of the optical burst flow). In this embodiment, the illustrated components of ingress, switching and egress nodes 710, 712 and 714 are implemented using machine-readable instructions that cause a machine (*e.g*., a processor) to perform operations that allow the nodes to transfer information to and from other nodes in the PBS network. In this example, the lightpath for the optical burst flow is from ingress node 710, to switching node 712 and then to egress node 714.

Ingress node 710 includes an ingress PBS MAC layer component 720 having a data burst assembler 721, a data burst scheduler 722, an offset time manager 724, a control burst builder 726 and a burst framer 728. In one embodiment, data burst assembler 721 assembles the data bursts to be optically transmitted over PBS network 10 (Figure 1). In one embodiment, the size of the data burst is determined based on many different network parameters such as quality-of-service (QoS), number of available optical channels, the size of electronic buffering at the ingress nodes, the specific burst assembly algorithm, etc.

Data burst scheduler 722, in this embodiment, schedules the data burst transmission over PBS network 10 (Figure 1). In this embodiment, ingress PBS MAC layer component 710 generates a bandwidth request for insertion into the control burst associated with the data burst being formed. In one embodiment, data burst scheduler 722 also generates the schedule to include an offset time (from offset manager 724 described below) to allow for the various nodes in PBS network 10 to process the control burst before the associated data burst arrives.

In one embodiment, offset time manager 724 determines the offset time based on various network parameters such as, for example, the number of hops along the selected lightpath, the processing delay at each switching node, traffic loads for specific lightpaths, and class of service requirements.

Then control burst builder 726, in this embodiment, builds the control burst using information such as the required bandwidth, burst scheduling time, in-band or out-of-band signaling, burst destination address, data burst length, data burst channel wavelength, offset time, priorities, and the like.

Burst framer 728 frames the control and data bursts (using the framing format described below in conjunction with Figures 7-10 in some embodiments). Burst framer 728 then transmits the control burst over PBS network 10 via a physical optical interface (not shown), as indicated by an arrow 750. In this embodiment, the control burst is transmitted out of band (OOB) to switching node 712, as indicated by an optical control burst 756 and PBS TDM channel 757 in Figure 7. Burst framer 728 then transmits the data burst according to the schedule generated by burst scheduler 722 to switching node 712 over the PBS network via the physical optical interface, as indicated by an optical burst 758 and PBS TDM channel 759 in Figure 7. The time delay between optical bursts 756 (control burst) and 758 (data burst) in indicated as an OFFSET₁ in Figure 7.

Switching node 712 includes a PBS switch controller 730 that has a control burst processing component 732, a burst framer/de-framer 734 and a hardware PBS switch (not shown).

In this example, optical control burst 756 is received via a physical optical interface (not shown) and optical switch (not shown) and converted to electrical signals (*i.e*., O-E conversion). Control burst framer/de-framer 734 de-frames the control burst information and provides the control information to control burst processing component 732. Control burst processing component 732 processes the information, determining the corresponding data burst's destination, bandwidth reservation, next control hop, control label swapping etc.

PBS switch controller component 730 uses some of this information to control and configure the optical switch (not shown) to switch the optical data burst at the appropriate time duration to the next node (*i.e*., egress node 714 in this example) at the proper channel. In some embodiments, if the reserved bandwidth is not available, PBS switch controller component 730 can take appropriate action. For example, in one embodiment PBS switch controller 730 can: (a) determine a different lightpath to avoid the unavailable optical channel (*e.g*., deflection routing); (b) delay the data bursts using integrated buffering elements within the PBS switch fabric such as fiber delay lines; (c) use a different optical channel (*e.g*. by using tunable wavelength converters); and/or (d) drop only the coetaneous data bursts. Some embodiments of PBS switch controller component 730 may also send a negative acknowledgment message back to ingress node 710 to re-transmit the dropped burst.

However, if the bandwidth can be found and reserved for the data burst, PBS switch controller component 730 provides appropriate control of the hardware PBS switch (not shown). In addition, PBS switch controller component 730 generates a new control burst based on the updated reserved bandwidth from control burst processing component 732 and the available PBS network resources. Control burst framer/de-framer 734 then frames the re-built control burst, which is then optically transmitted to egress node 714 via the physical optical interface (not shown) and the optical switch (not shown), as indicated by PBS TDM channel 764 and an optical control burst 766 in Figure 7.

Subsequently, when the optical data burst corresponding to the received/processed control burst is received by switching node 712, the hardware PBS switch is already configured to switch the optical data burst to egress node 714. In other situations, switching node 712 can switch the optical data burst to a different node (*e.g*., another switching node not shown in Figure 7). The optical data burst from ingress node 710 is then switched to egress node 714, as indicated by PBS TDM channel 767 and an optical data burst 758A. In this embodiment, optical data burst 758A is simply optical data burst 758 re-routed by the hardware PBS switch (not shown), but possibly transmitted in a different TDM channel. The time delay between optical control burst 766 and optical data burst 758A is indicated by an OFFSET₂ in Figure 7, which is smaller than OFFSET₁ due, for example, to processing delay and other timing errors in switching node 712.

Egress node 714 includes a PBS MAC component 740 that has a data demultiplexer 742, a data burst re-assembler 744, a control burst processing component 746, and a data burst de-framer 748.

Egress node 714 receives the optical control burst as indicated by an arrow 770 in Figure 7. Burst de-framer 748 receives and de-frames the control burst via a physical O-E interface (not shown). In this embodiment, control burst processing component 746 processes the de-framed control burst to extract the pertinent control/address information.

After the control burst is received, egress node 714 receives the data burst(s) corresponding to the received control burst, as indicated by an arrow 772 in Figure 7. In this example, egress node 714 receives the optical data burst after a delay of OFFSET₂, relative to the end of the control burst. In a manner similar to that described above for received control bursts, burst de-framer 748 receives and de-frames the data burst. Data burst re-assembler 744 then processes the de-framed data burst to extract the data (and to re-assemble the data if the data burst was a fragmented data burst). Data demultiplexer 742 then appropriately de-multiplexes the extracted data for transmission to the appropriate destination (which can be a network other than the PBS network).

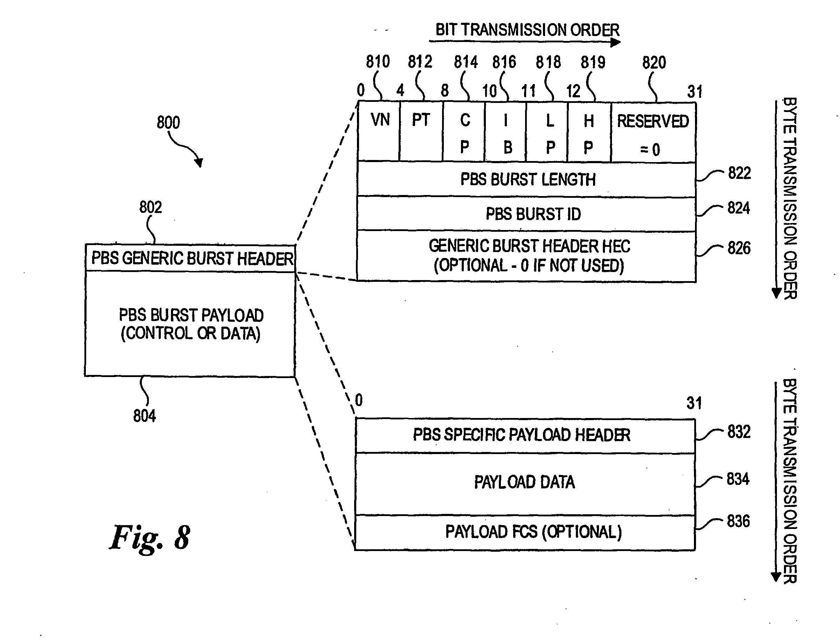

Figure 8 illustrates a generic PBS framing format 800 for PBS optical bursts, according to one embodiment of the present invention. Generic PBS frame 800 includes a PBS generic burst header 802 and a PBS burst payload 804 (which can be either a control burst or a data burst). Figure 8 also includes an expanded view of PBS generic burst header 802 and PBS burst payload 804.

PBS generic burst header 802 is common for all types of PBS bursts and includes a version number (VN) field 810, a payload type (PT) field 812, a control priority (CP) field 814, an in-band signaling (IB) field 816, a label present (LP) field 818, a header error correction (HEC) present (HP) field 819, a burst length field 822, and a burst ID field 824. In some embodiments, PBS generic burst header also includes a reserved field 820 and a HEC field 826. Specific field sizes and definitions are described below for framing format having 32-bit words; however, in other embodiments, the sizes, order and definitions can be different.

In this embodiment, PBS generic burst header 802 is a 4-word header. The first header word includes VN field 810, PT field 812, CP field 814, IB field 816 and LP field 818. VN field 810 in this exemplary embodiment is a 4-bit field (*e.g*., bits 0-3) defining the version number of the PBS Framing format being used to frame the PBS burst. In this embodiment, VN field 810 is defined as the first 4-bits of the first word, but in other embodiments, it need not be the first 4-bits, in the first word, or limited to 4-bits.

PT field 812 is a 4-bit field (bits 4-7) that defines the payload type. For example, binary "0000" may indicate that the PBS burst is a data burst, while binary "0001" indicates that the PBS burst is a control burst, and binary "0010" indicates that the PBS burst is a management burst. In this embodiment, PT field 812 is defined as the second 4-bits of the first word, but in other embodiments, it need not be the second 4-bits, in the first word, or limited to 4-bits.

CP field 814 is a 2-bit field (bits 8-9) that defines the burst's priority. For example, binary "00" may indicate a normal priority while binary "01" indicates a high priority. In this embodiment, PT field 812 is defined bits 8 and 9 of the first word, but in other embodiments, it need not be bits 8 and 9, in the first word, or limited to 2-bits.

IB field 816 is a one-bit field (bit 10) that indicates whether the PBS control burst is being signaled in-band or OOB. For example, binary "0" may indicate OOB signaling while binary "1" indicates in-band signaling. In this embodiment, IB field 816 is defined as bit 10 of the first word, but in other embodiments, it need not be bit 10, in the first word, or limited to one-bit.

LP field 818 is a one-bit field (bit 11) used to indicate whether a label has been established for the lightpath carrying this header. In this embodiment, LP field 818 is defined as bit 11 of the first word, but in other embodiments, it need not be bit 11, in the first word, or limited to one-bit.

HP field 819 is a one-bit (bit 12) used to indicate whether header error correction is being used in this control burst. In this embodiment, HP field 819 is defined as bit 12 of the first word, but in other embodiments, it need not be bit 12, in the first word, or limited to one-bit. The unused bits (bits 13-31) form field(s) 820 that are currently unused and reserved for future use.

The second word in PBS generic burst header 802, in this embodiment, contains PBS burst length field 822, which is used to store a binary value equal to the length the number of bytes in PBS burst payload 804. In this embodiment, the PBS burst length field is 32-bits. In other embodiments, PBS burst length field 822 need not be in the second word and is not limited to 32-bits.

In this embodiment, the third word in PBS generic burst header 802 contains PBS burst ID field 824, which is used to store an identification number for this burst. In this embodiment, PBS burst ID field 824 is 32-bits generated by the ingress node (*e.g*., ingress node 710 in Figure 7). In other embodiments, PBS burst ID field 824 need not be in the third word and is not limited to 32-bits.

The fourth word in PBS generic burst header 802, in this embodiment, contains generic burst header HEC field 826, which is used to store an error correction word. In this embodiment, generic burst header HEC field 826 is 32-bits generated using any suitable known error correction technique. In other embodiments, generic burst header HEC field 826 need not be in the fourth word and is not limited to 32-bits. As in indicated in Figure 8, generic burst header HEC field 826 is optional in that if error correction is not used, the field may be filled with all zeros. In other embodiments, generic burst header HEC field 826 is not included in PBS generic burst header 802.

PBS burst payload 804 is common for all types of PBS bursts and includes a PBS specific payload header field 832, a payload field 834, and a payload frame check sequence (FCS) field 836.

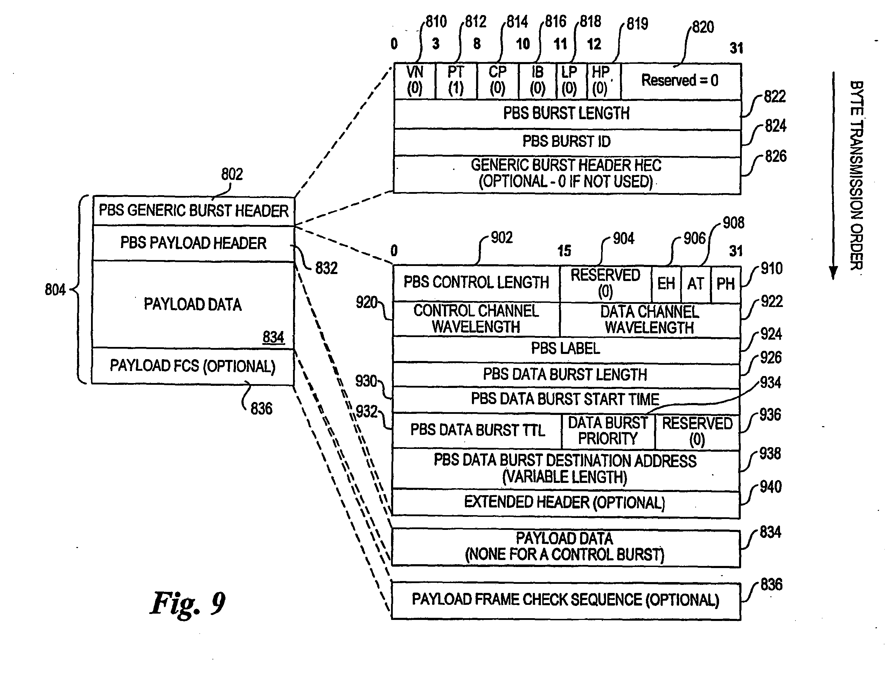

In this exemplary embodiment, PBS specific payload header 832 is the first part (*i.e*., one or more words) of PBS burst payload 804. Specific payload header field 832 for a control burst is described below in more detail in conjunction with Figure 9. Similarly, specific payload field 832 for a data burst is described below in conjunction with Figure 9. Typically, specific payload header field 832 includes one or more fields for information related to a data burst, which can be either this burst itself or contained in another burst associated with this burst (*i.e*., when this burst is a control burst).

Payload data field 834, in this embodiment, is the next portion of PBS burst payload 804. In some embodiments, control bursts have no payload data, so this field may be omitted or contain all zeros. For data bursts, payload data field 834 may be relatively large (*e.g*., containing multiple IP packets or Ethernet frames).

Payload FCS field 836, in this embodiment, in the next portion of PBS burst payload. In this embodiment, payload FCS field 836 is a one-word field (*i.e*., 32-bits) used in error detection and/or correction. As in indicated in Figure 8, payload FCS field 836 is optional in that if error detection/correction is not used, the field may be filled with all zeros. In other embodiments, payload FCS field 836 is not included in PBS burst payload 804.

Figure 9 illustrates a PBS optical control burst framing format 900, according to one embodiment of the present invention. To help improve clarity, Figure 9 includes the expanded views of PBS generic burst header 802 and PBS burst payload 804 (previously described in conjunction with Figure 8), with a further expansion of PBS payload header field 832 (described below) when part of a control burst. In this example, the PT field is set to "01" to indicate that the burst is a control burst. The CP field is set to "0" to indicate that the burst has normal priority. The IB field is set to "0" to indicate that the burst is using OOB signaling. The LP field is set to "0" to indicate that there is no label for this control burst.

In this exemplary embodiment of a PBS control burst, PBS payload header field 832 includes: a PBS control length field 902; an extended header (EH) field 906; an address type (AT) field 908; a payload FCS present (PH) field 910; a control channel wavelength field 920; a data channel wavelength field 922; a PBS label field 924; a PBS data burst length field 926; a PBS data burst start time field 930; a PBS data burst time-to-live (TTL) field 932; a data burst priority field 934; a PBS data burst destination address field 938; and an optional extended header field 940.

In this embodiment, the first word of PBS payload header 832 includes PBS control length field 902, which is used for storing the length of the control header in bytes. In this embodiment, PBS control length field 902 is a 16-bit field (bits 0-15) calculated by control burst builder 726 (Figure 7) or control burst processor 732 (Figure 7). In other embodiments, PBS control length field 902 need not be the first 16-bits, in the first word, or limited to 16-bits. A reserved field 904 (bits 16-27) is included in PBS payload header 832 in this embodiment. In other embodiments, these bits may be used for other field(s).

The first word of PBS payload header 832 also includes EH field 906, which is used in this embodiment to indicate whether an extended header is present in the burst. In this embodiment, EH field 906 is a 1-bit field (bit 28). In other embodiments, EH field 906 need not be bit 28, or in the first word.

The first word of PBS payload header 832 also includes AT field 908, which is used in this embodiment to indicate the address type of the associated PBS data burst's destination. For example, the address type may be an IP address (*e.g*., IPv4, IPv6), a network service access point (NSAP) address, an Ethernet address or other type of address. In this embodiment, AT field 908 is a 2-bit field (bits 29-30). In other embodiments, AT field 908 need not be bits 17-18, in the first word, or limited to 2-bits.

In this embodiment, the first word of PBS payload header 832 also includes PH field 910, which is used to indicate whether a payload FCS is present in the burst. In this embodiment, PH field 910 is a 1-bit field (bit 31). In other embodiments, EH field 906 need not be bit 16, or in the first word.

The second word of PBS payload header 832, in this embodiment, includes control channel wavelength field 920, which is used to indicate a WDM wavelength in which the control burst is supposed to be modulated. In this embodiment, control channel wavelength field 920 is a 16-bit field (bits 0-15). In other embodiments, control channel wavelength field 920 need not be bits 0-15, in the second word, or limited to 16-bits.

In this embodiment, the second word of PBS payload header 832 also includes data channel wavelength field 922, which is used to indicate a WDM wavelength in which the data burst is to be modulated. In this embodiment, data channel wavelength field 922 is a 16-bit field (bits 16-31). In other embodiments, data channel wavelength field 922 need not be bits 16-31, in the second word, or limited to 16-bits.

A third word of PBS payload header 832 includes PBS label field 924, which is used in this embodiment to store the label (if any) for the lightpath being used by the burst. In this embodiment, the label is a 32-bit word generated by label management component 67 (Figure 6). In other embodiments, PBS label field 924 need not be the third word, or limited to 32-bits.

A fourth word of PBS payload header 832 includes PBS data burst length field 926. In this embodiment, the PBS data burst length is a 32-bit word. In other embodiments, PBS data burst length field 926 need not be the fourth word, or limited to 32-bits.

A fifth word of PBS payload header 832 includes PBS data burst start time field 930. In this embodiment, the PBS data burst start time is a 32-bit word, generated by burst scheduler 722 (Figure 7). In other embodiments, PBS data burst start time field 930 need not be the fifth word, or limited to 32-bits.

A sixth word of PBS payload header 832 includes PBS data TTL field 932. In this embodiment, PBS data TTL field 732 is a 16-bit (bits 0-15) field, generated by ingress PBS MAC component 720 (Figure 7). For example, in one embodiment, burst scheduler 722 (Figure 7) of ingress PBS MAC component 720 can generate the TTL value. In other embodiments, PBS data TTL field 932 need not be bits 0-15, in the sixth word, or limited to 16-bits.

The sixth word of PBS payload header 832 also includes data burst priority field 932. In this embodiment, data burst priority field 932 is an 8-bit field (bits 16-23), generated by ingress PBS MAC component 720 (Figure 7). For example, in one embodiment, burst scheduler 722 (Figure 7) of ingress PBS MAC component 720 can generate the data burst priority value. In other embodiments, data burst priority field 932 need not be bits 16-23, in the sixth word, or limited to 8-bits. Further, in this embodiment, the sixth word of PBS payload header 832 includes a reserved field 935 (bits 24-31) which can be used in the future for other field(s).

A seventh word of PBS payload header 832 also includes PBS data burst destination address field 938. In this embodiment, PBS data burst destination address field 938 is variable length field, shown as a single 32-bit word for clarity. In other embodiments, PBS data burst destination address field 938 need not be limited to 32-bits. The actual length of the address may vary, depending on the address type as indicated in AT field 908.

An eighth word of PBS payload header 832 can include extended header field 940. This header can be used to hold other header data that may be used in the future. When this header is used, EH field 906 is set to 1. In this embodiment, payload data field 834 and payload FCS field 836 have been described above.

In accordance with further aspects of embodiments of the invention, mechanisms are now disclosed for recovering node (switching or end node) resources in response to detection of a resource failure. For example, under PBS operations, a lightpath comprising a plurality of lightpath segments is reserved for a given variable-duration timeslot via corresponding control bursts. Each switching node along the route (as identified by an incoming lightpath segment received at that switching node) maintains a reservation table containing reservation data indicating how it is to switch incoming and outgoing data corresponding to currently-reserved timeslots. If a switching node fails (*e.g*., a fiber gets cut or disconnected or bandwidth is determined to be unavailable due to traffic constraints, etc), the lightpath cannot be completed for the current data burst. As a result, any network resources (*i.e.* both external to a node and resources provided internally by a node) reserved along the lightpath by a corresponding control burst no longer will be used for routing subsequently-sent data bursts. Under conventional approaches, the use of these resources for the reserved timeslots would simply be lost. However, under embodiments of the resource recovery mechanism, information is passed to appropriate switching nodes to inform those nodes that the resources will not be used, and thus are freed up to accept new reservations spanning from the initially-reserved timeslots.

An exemplary lightpath reservation and corresponding resource recovery is illustrated in Figure 10. Figure 10 shows an exemplary PBS network 1000, including PBS switching nodes 1, 2, 3, 4, 5, 6, and 7. The PBS switching nodes are linked via various fibers, including fiber links 1002, 1004, 1006, 1008, 1010, 1012, 1014, 1016, 1018, 1020, 1022, 1024, 1026, 1028, 1030, 1032, and 1033. PBS network 1000 further includes edge nodes A, B, C, D, E, and F, which are linked to corresponding switching nodes via fiber links 1034, 1036, 1038, 1040, 1042, and 1044. The edge nodes A, B, C, D, E, and F provide ingress and/or egress points to PBS network 1000, enabling external networks 1046, 1048, 1050, 1052, 1054, and 1056 to route data between each other via PBS network 1000, wherein respective links 1058, 1060, 1062, 1064, 1066, and 1068 are used to connect the external networks to a respective edge node. From the viewpoint of each external network, they only can "see" the edge node to which they are connected, and are aware of other external networks that may be reached via PBS network 1000. In effect, the rest of PBS network 1000 appears as a "black box" to the external networks, and, in fact, the external networks do not need to be aware of the internal infrastructure of a PBS network.

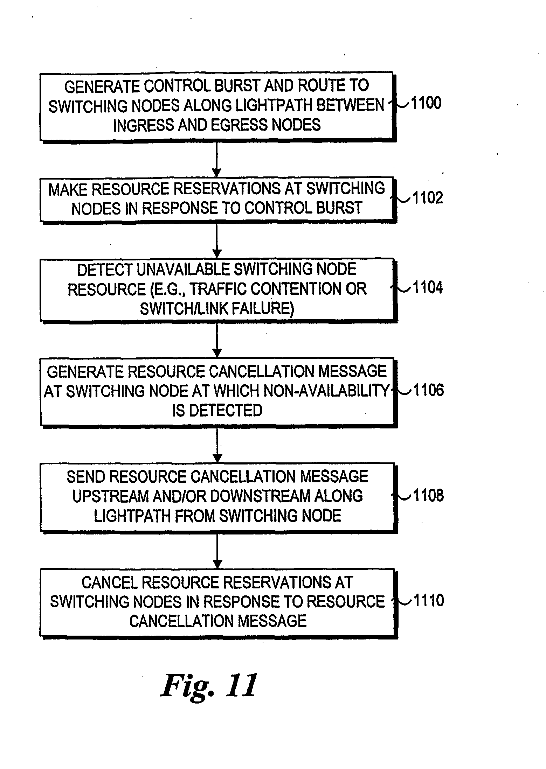

Figure 11 shows a flowchart illustrating the operations that are performed during resource reservation and cancellation in responses to detected resource unavailability in accordance with one embodiment. The process begins in a block 1300, in which an ingress node generates a control burst in response to a network access request, and the control burst is then routed between the ingress node and intermediate switching nodes until it reaches the egress node to which the destination network is coupled to set up resource reservations along the lightpath. For example, in the illustrated example of Figure 10, it is desired to send traffic comprising a data burst from external network 1040 *(i.e.,* the source) to external network 1056 *(i.e.,* the destination). Thus, the ingress node will be edge node A, while the egress node will be edge node F. Accordingly, a control burst is generated at edge node A having a format discussed above with reference to Figures 8 and 9, and sent out to reserve resources along a route build by concatenating multiple lightpath segments to form a lightpath between the ingress and egress edge nodes A and F. An exemplary route (lightpath) shown in Figure 10 is depicted using a dash-dot-dash line format, and includes lightpath segments 1034, 1004, 1016, 1028, 1032, and 1044, which are coupled between edge node A, switching node 1, switching node 3, switching node 5, switching node 6, switching node 7 and edge node F, respectively.

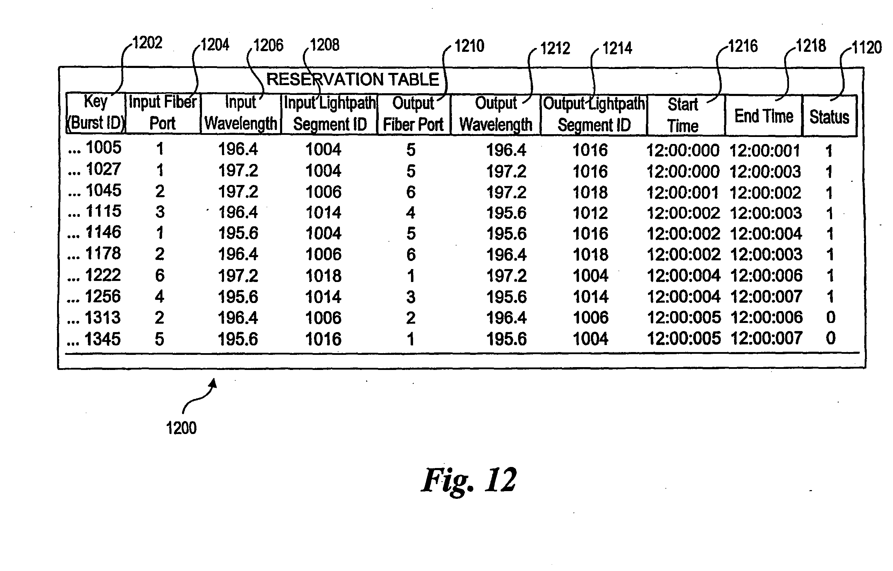

As the control burst is processed at each switching node, a reservation comprising a scheduled allocation of bandwidth for specified input and output lightpath segments at specified wavelengths for a specified timeslot is made, as depicted by a block 1102. In one embodiment, reservation data are stored in a reservation table 1200, as shown in Figure 12. Reservation table 1200 includes a plurality of columns (fields) in which data are stored in rows, wherein data for a given row is called a "record." The columns include an optional Key column 1202, an Input Fiber Port column 1204, an Input Wavelength column 1206, an optional Input Lightpath Segment ID column 1208, an Output Fiber Port column 1210, and Output Wavelength column 1212, an optional Output Lightpath Segment ID column 1214, a Start Time column 1216, and End Time column 1218, and an optional Status column 1220

In general, Key column 1202 is used to store a unique identifier for each record, enabling quick retrieval of records and guaranteeing record uniqueness. In one embodiment, this unique identifier comprises the PBS burst ID stored in PBS burst field 824 of the control burst.

Data relating to incoming link parameters are stored in Input Fiber Port column 1204, Input Wavelength column 1206, and, optionally, Input Lightpath Segment ID column 1208, while data relating to outgoing link parameters are stored in Output Fiber Port column 1210, Output Wavelength column 1212, and, optionally, Output Lightpath Segment ID column 1214. Each switching node is coupled to two or more fiber links via respective I/O ports. For example, the exemplary data in reservation table 1200 corresponds to switching node 3, which includes six network input/output (I/O) ports, depicted as encircled numbers 1-6. The value in Input Fiber Port column 1204 identifies the I/O port at which data is received by the particular switching node maintaining the reservation table, while the value in Output Fiber Port column 1210 identifies the I/O port via which data is transmitted. As an option, input and output fiber routing data may be stored through reference to input and output lightpath segments, in lieu of or in addition to specifying I/O ports. Accordingly, in one embodiment, data identifying the input and output lightpath segments is stored in Input Lightpath Segment ID column 1208 and Output Lightpath Segment ID column 1214, respectively.

As discussed above, a given lightpath segment may support concurrent data streams that are transmitted using different wavelengths. Accordingly, data in Input Wavelength column 1206 is used to identify the wavelength incoming data is to be transmitted at for a given reservation record, while data in Output Wavelength column 1212 is used to identify the wavelength outgoing data is to be transmitted at.

Routing paths through each switching node are reserved for a respective timeslot of variable duration based on appropriate information contained in the control burst. Typically, the time slot will be defined by a start time and an end time, with corresponding data stored in Start Time column 1216 and End time column 1218. In one embodiment, the start time comprises an offset from the time at which the control burst is processed by the switching node. Optionally, a start time may be specified by PBS data burst start time field 930.

The end time for a given reservation is stored in End Time 1218. The end time, in effect, will comprise an offset from the start time, wherein the offset is selected such that the full data burst may be successfully transmitted from source to destination without reserving any unnecessary extra time or bandwidth. Typically, a control burst will reserve a resource timeslot for an amount of time varying from microseconds to milliseconds, although longer timeslots may also be reserved. For simplicity, the time data shown Start Time column 1116 and End Time column 1118 only reflect the millisecond level. The length of the reservation request, as specified in PBS data burst length field 926, will be determined as a function of the data payload (*i.e*., size of the payload in bytes) and the transmission bandwidth (*e.g*., 1 gigabits/sec, 10 gigabits/sec, *etc.*) For example, a payload of 1 megabits would require 1 millisecond to be transferred over a 1 gigabit/s Ethernet (1 GbE) link.

Optional Status column 1120 is used for providing status information relating to the reservation. For example, a binary value may be used to indicate whether a reservation is valid or invalid (*i.e*., cancelled). Optionally, a multi-bit value may be used to specifying one of a plurality of reservation statuses.

Continuing with the flowchart of Figure 11, the remaining operations concern detection of resource non-availability and corresponding release of resource reservations. First, in a block 1104, an unavailable switching node resource is detected. Non-availability of a resource will generally result from resource constraints due to traffic contention or a switching node or fiber link failure. For instance, in the illustrated example it is presumed that a traffic fault is detected that indicates lightpath segment 1016 is unavailable for transmitting data bursts corresponding to the resource reservation made in response to processing the control burst. When the data burst arrives at each switching node along the reserved lightpath, it may encounter traffic contention. In other words, two different incoming data bursts at two different ports at switching node have the same switching node output port destination (for switches that support multiple concurrent wavelength transmissions) at the same time. If, for example, the incoming data bursts are classified according to their priority, then the simplest way to resolve this contention is to drop the lower priority incoming data bursts while transmitting the higher priority data bursts. However, the control burst of the dropped data burst continues to reserve the necessary bandwidth with the PBS switch configurations on the subsequent upstream switching nodes along its lightpath until it is terminated at the destination egress node. Consequently, this leads to a wasted reserved bandwidth, since the upstream reserved switch configurations for the dropped data burst cannot be used by other data bursts until the reserved bandwidth is released. Therefore, the overall network throughput is decreased with increased end-to-end latency.

Embodiments of the invention address this problem through a bandwidth (*i.e*., resource) cancellation mechanism that is implemented via an extension to the PBS signaling protocol discussed above. In particular, the extended PBS signaling protocol has the ability to signal to switching nodes along the reserved lightpath (either upstream and/or downstream nodes) that a specific switching node has dropped a data burst due to resource constraints or switch/link failures, and that the corresponding resource reservations along the selected lightpath can now be released and made available to other data burst reservation requests. The mechanism is initiated in a block 1106, wherein a "Resource Cancellation Message" (RCM), which has a similar format to the control burst, is generated at the switching node at which the non-availability is detected.

In one embodiment, the mechanism employs a variant of the control burst format shown in Figures 8 and 9, wherein a resource cancellation control burst is propagated along the lightpath route in response to a resource unavailable or failure detection. The control interface unit within the switching node where the data burst was dropped (or otherwise detecting a switch or link failure) generates a RCM that is transmitted to appropriate nodes along the selected lightpath up to the destination egress node. Depending on the particular implementation and/or type of failure, the resource cancellation message may be sent to upstream (from the failure point forward to the destination egress node) switching nodes and/or downstream (from the failure point backward to the source ingress node) switching nodes.

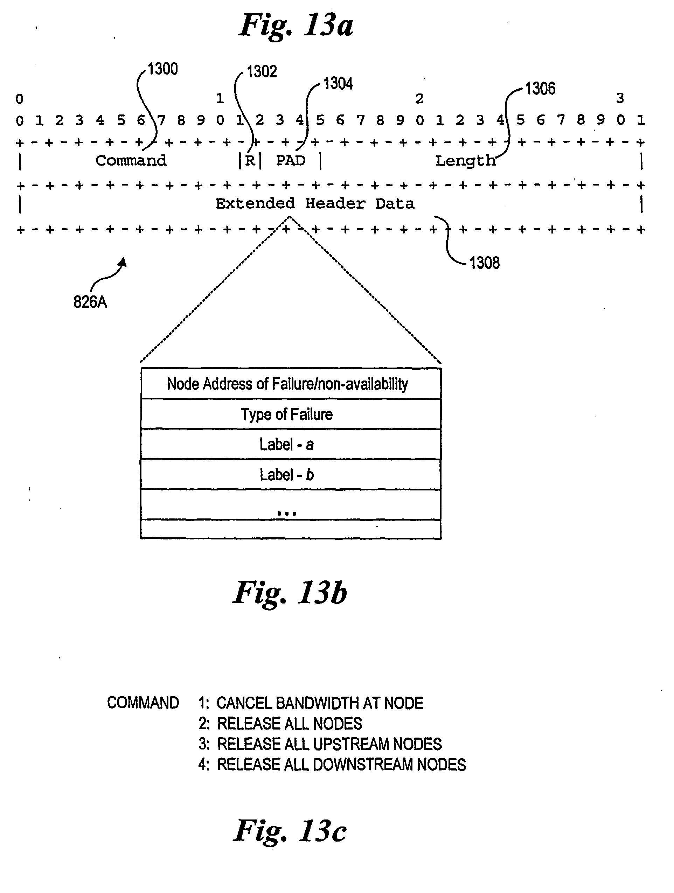

In one embodiment, the Resource Cancellation Message is stored in the extended header field 826 of a control burst. For example, Figure 13a shows the format of an extended header field 826A that may contain data so as to function as a Resource Cancellation Message. The extended header includes a command field 1300, a Reserved (R) field 1302, a PAD field 1304, a Length field 1306, and Extended Header data 1308. The Command field 1300 comprises a12-bit field that identifies the Command carried by the Extended Header, *e.g*., a command indicating a "Bandwidth Cancellation" operation. The Reserved field 1302 is a 1-bit field containing a reserved bit. The PAD field 1304 comprises a 3-bit field that identifies the number of padding bytes that may be necessary to pad the last word of the extended header field to form a 32-bit word.

The length bit comprises a 16-bit field that contains the length, in words (*i.e*., 32-bits), including the Command/Length word of the Extended Header. The minimum length will be "1", *i.e.,* a Command field only for commands that do not require any associated data. The Extended Header data field 1308 is a variable-length field that may contain various types of information. The field may employ up to 3 bytes of padding

The intermediate optical switching node where the resource contention occurs has all the necessary optical burst state information pertinent to the data burst that was just discarded or is being discarded due to the detected resource constraint or switch/link failure. This information is employed to build a PBS Control Burst Frame that is generated at this node that will be propagated along the same hop-by-hop lightpath used by the control frame that reserved the bandwidth initially. This time, however, the control unit of the switching node also fills up the Extended Header field of the control frame. For example, an exemplary set of extended header data includes the following values:
Command: 0x001 (Bandwidth Cancellation)
PAD: 0 (for IPv4 address type, might have a value for other type of addressed based on the AT field of the header)
Length: 1+n (1 for header + n for extended data)
Extended Header Data:
   - Address of node where the failure occurred
   - Type of Failure (i.e., traffic contention, fiber link failure, switching node failure, etc.)
   - Label stack: All the labels (a, b,.., etc.) used along the reserved lightpath

Figure 13b shows further details of exemplary data that may be contained in the extended header data field 1308. In addition to identifying the address of the node that has failed or is otherwise unavailable, the data may identify a type of failure such as traffic contention, fiber link failure, switching node failure, etc. As described below, the labels are used for routing resource reservations. In one embodiment, resources are released at the label level rather than the node level, unless a command value indicates that all resources are to be released.

In one embodiment, the command field 1300 contains a value or code that defines how resource cancellation is to be implemented. For example, exemplary actions and command codes are shown in Figure 13c. The simplest action is to cancel the reservation for the resource at the affected node. The most complex action is to cancel resource reservations for all nodes along the lightpath. Other action options include canceling resource reservations for upstream or downstream nodes, as described below.

Additional information for the resource cancellation control burst may be derived from the control burst that was previously sent to establish the resource reservation. This includes the PBS burst ID stored in PBS burst ID field 824, which may be used to uniquely identify the lightpath for which resource reservations are made.

Once the resource cancellation control burst is generated, it is routed upstream and/or downstream along the lightpath so that it is received and processed at corresponding switching and edge nodes, as indicated in a block 1108. In one embodiment, the mechanism for routing the resource cancellation control burst is similar to that employed for routing a "normal" control burst. In general, data is extracted at each switching node is used to determine the "next hop" in the lightpath chain. For example, in one embodiment, data from reservation table 1200 is extracted to determine the next hop. When the PBS burst ID is stored in Key column 1102, corresponding next-hop routing information for both upstream and downstream nodes can be easily extracted. First, the reservation record is retrieved based on the PBS burst ID value. Once retrieved, the next upstream hop corresponds to the switching or edge node connected to the fiber link coupled to the output fiber port specified by the value in Output Fiber Port column 1210 or identified by the value in Output Lightpath Segment ID column 1214. Similarly, the next downstream hop corresponds to the switching or edge node connected to the fiber link couple to the input fiber port (as specified by the value in Input Fiber Port column 1204) or identified by the value in Input Lightpath Segment ID column 1208.

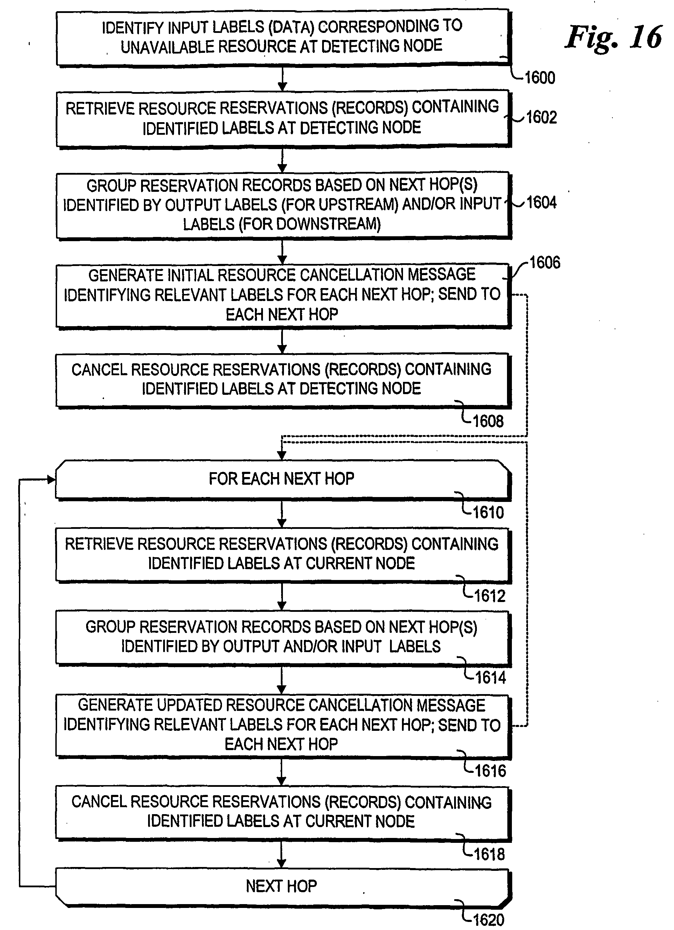

In one embodiment, resource cancellation messages containing GMPLS-based labels are employed to route the resource cancellation message between nodes. For example, label management component 67 can be modified to support a PBS control channel message space. In one embodiment, the label operations are performed after control channel signals are O-E converted. The ingress nodes of the PBS network act as label edge routers (LERs) while the switching nodes act as label switch routers (LSRs). An egress node acts as an egress LER substantially continuously providing all of the labels of the PBS network. An ingress node can propose a label to be used on the lightpath segment it is connected to, but the downstream node will be the deciding one in selecting the label value, potentially rejecting the proposed label and selecting its own label. A label list can also be proposed by a node to its downstream node. This component can advantageously increase the speed of control channel context retrieval (by performing a pre-established label look-up instead of having to recover a full context). Further details of the label usage and processing are described below in connection with Figure 16.

Returning to the flowchart of Figure 13, in a block 1310, processing of the resource cancellation control burst is performed, resulting in cancellation of the corresponding resource reservations. For example, a resource reservation may be cancelled by deleting *(i.e.,* removing) the record specified by the PBS burst ID, or marking the record as invalid via a change to the value in Status column 1220. As each switching node considers existing reservations when determining whether to accept a reservation request, canceling the resource reservation has the effect of releasing the resource for subsequent use during the reserved timeslot.

As discussed above, in one embodiment the resource reservation cancellation process is facilitated through use of a GMPLS-based label scheme. The signaling of PBS labels for lightpath set-up, tear down, and maintenance is done through an extension of IETF (internet engineering task force) resource reservation protocol-traffic engineering (RSVP-TE). More information on GMPLS signaling with RSVP-TE extensions can be found at http://www.ietf.org/rf/rfc3473.txt.

The PBS label, which identifies the data burst input fiber, wavelength, and lightpath segment, channel spacing, is used on the control path to enable one to make soft reservation request of the network resources (through corresponding RESV messages). If the request is fulfilled (through the PATH message), each switching node along the selected lightpath commits the requested resources, and the lightpath is established with the appropriate segment-to-segment labels. Each switching node is responsible for updating the initial PBS label through the signaling mechanism, indicating to the previous switching node the label for its lightpath segment. If the request cannot be fulfilled or an error occurred, a message describing the condition is sent back to the originator to take the appropriate action (i.e., select another lightpath characteristics). Thus, the implementation of the PBS label through signaling enables an MPLS type efficient lookup for the control burst processing. This processing improvement of the control burst at each switching node reduces the required offset time between the control and data bursts, resulting in an improved PBS network throughput and reduced end-to-end latency.

In one embodiment, the label signaling scheme reduces the PBS offset time by reducing the amount of time it takes to process a signaled lightpath. This is achieved by extending the GMPLS model to identify each lightpath segment within the PBS network using a unique label defined in a PBS label space. The use of a PBS label speeds up the PBS control burst processing by allowing the control interface unit within the PBS switching node, which processes the control burst, to lookup relevant physical routing information and other relevant processing state based on the label information used to perform a fast and efficient lookup. Thus, each PBS switching node has access in one lookup operation to the following relevant information, among others: 1) the address of the next hop to send the control burst to; 2) information about the outgoing fiber and wavelength; 3) label to use on the next segment if working in a label-based mode; and 4). data needed to update the scheduling requirement for the specific input port and wavelength.

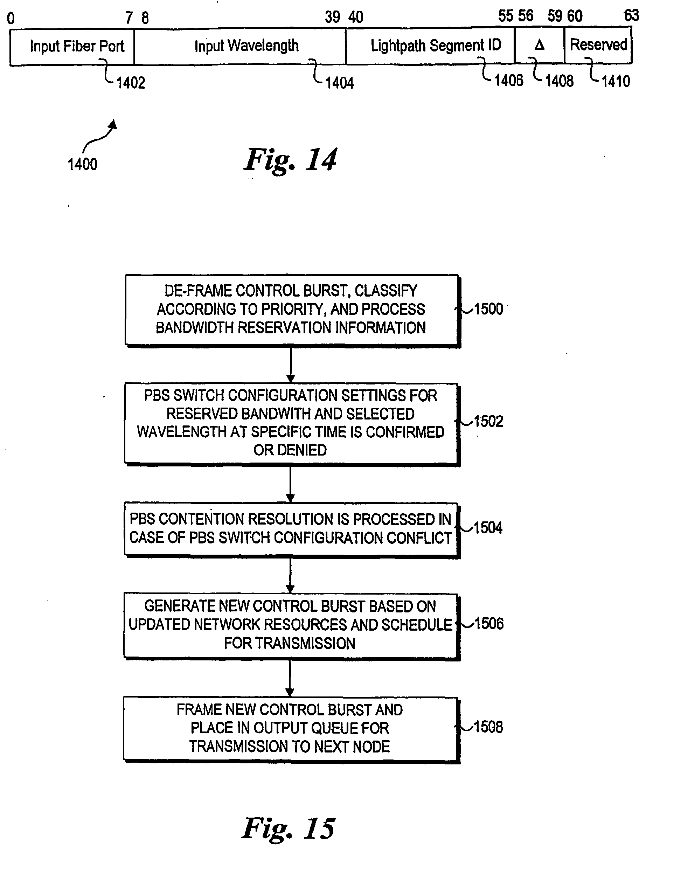

An exemplary GMPLS-based PBS label format 1400 is shown in Figure 14 with its corresponding fields. In the illustrated embodiment, PBS label 1400 comprises five fields, including an input fiber port field 1402, a input wavelength field 1404, a lightpath segment ID field 1406, a channel spacing (Δ) field 1408, and a reserved field 1410. The input fiber port field 1402 comprises an 8-bit field that specifies the input fiber port of the data channel identified by the label (which itself is carried on the control wavelength. The input wavelength field 1704 comprises a 32-bit field that describes the input data wavelength used on the input fiber port specified by input fiber port field 1402. In one embodiment, the input wavelength is represented using IEEE (Institute of Electrical and Electronic Engineers) standard 754 for single precision floating-point format. The 32-bit word is divided into a 1-bit sign indicator S, an 8-bit biased exponent e, and a 23-bit fraction. The lightpath segment ID field 1406 comprises a 16-bit field that describes the lightpath segment ID on a specific wavelength and a fiber cable. Lightpath segment ID's are predefined values that are determined based on the PBS network topology. The channel spacing field 1408 comprises a 4-bit field used for identifying the channel spacing (*i.e*., separation between adjacent channels).

The transmitted PBS control bursts, which are processed electronically by the PBS Network processor (NP), undergo the following operations: With reference to the flowchart of Figure 15, the process begins in a block 1500, wherein the control burst is de-framed, classified according to its priority, and the bandwidth reservation information is processed. If an optical flow has been signaled and established this flow label is used to lookup the relevant information. Next, in a block 1502, the PBS switch configuration settings for the reserved bandwidth on the selected wavelength at a specific time is either confirmed or denied. If confirmed, the process proceeds; if denied, a new reservation request process is initiated.

In a block 1504, PBS contention resolution is processed in case of PBS switch configuration conflict. One of the three possible contention resolution schemes, namely FDL-based buffering, tunable wavelength converters, and deflection routing can be selected. If none of these schemes are available, the incoming data bursts are dropped until the PBS switch becomes available and a negative acknowledgement message is sent to the ingress node to retransmit. A new control burst is generated in a block 1506, based on updated network resources retrieved from the resource manager, and scheduled for transmission. The new control burst is then framed and placed in the output queue for transmission to the next node in a block 1508.

With reference to the flowchart of Figure 16, further details of the operations of blocks 1106, 1108, and 1110 in accordance with one embodiment that employs the foregoing PBS labels and associated data are illustrated. The process begins in a block 1600 in which input labels corresponding to the unavailable resource are identified at the detecting node. For example, Columns 1204, 1206 and 1208 of resource reservation table 1200 contains data extracted from input labels during the resource reservation process. (It is noted that input wavelength column 1206 shows a numerical input wavelength value for illustrative purposes. The input wavelength data contained in input wavelength field 1404 and channel spacing field 1408 may also be stored in separate columns.). In general, determination of unavailable resources will identify input lightpath segment and/or input fiber port. In some instances, the unavailable resource may pertain to a particular input wavelength for a given lightpath segment.

Once the labels are identified, corresponding resource reservation records are retrieved from resource reservation table 1200 in a block 1602. The resource reservation tables are then grouped based on the next hop(s) identified by the outgoing label data in a block 1604. For example, for upstream next hops, the next hop information may be 5 identified by the output fiber port and/or the output lightpath segment ID data contained in the retrieved records, while for downstream next hops, the next hop information may be identified by the input fiber port and/or the input lightpath segment ID data.

Next, in a block 1606, an initial Resource Cancellation Message (RCM), identifying relevant labels (for a given group), are generated for each next hop. These messages are then sent to the next hops. Sending the data can be accomplished by broadcasting the message on the applicable output fiber port (such that it is received by the next hop node), or sending the data to the next-hop address, which can be retrieved based on local network topology information stored at the node. For example, the node may store information that correlates input and output fiber ports with corresponding address. Activities for the detecting node are completed in a block 1608 by canceling the resource reservations (records) containing the identified labels.

Subsequent processing operations performed at each next hop are shown in the lower portion of the flowchart delineated by start and end loop blocks 1610 and 1620. These operations are similar to those performed at the detecting node. First, in a block 1612, resource reservation records are retrieved that include label data corresponding to the labels identified in the resource cancellation message. As before, the resource reservation records are then grouped by corresponding next hops in a block 1614. An updated resource cancellation message identifying the relevant input or output labels for each next hop are then generated and sent in a block 1616. The resource reservation records containing the label data are then cancelled in a block 1618. This process is repeated until the fmal nodes along the lightpaths (e.g., an ingress or egress node) are reached.

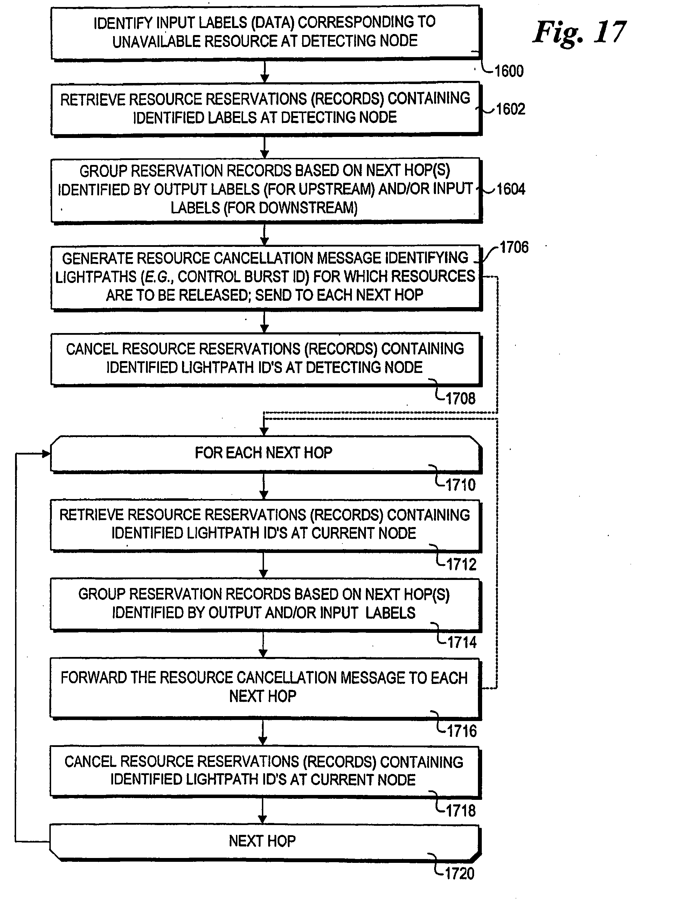

The flowchart of Figure 17 includes further details of the operations of blocks 1106, 1108, and 1110 in accordance with one embodiment that employs the foregoing label data in combination with the control burst ID data. In this embodiment, the operations of blocks 1600, 1602, and 1604 are performed in the same manner as discussed above; thus, at a block 1706 resource reservation records corresponding to the unavailable resource are retrieved and grouped by next hop. In block 1706, a single resource cancellation message identifying the lightpaths for which resources are to be released is generated and sent to each next hop, as applicable. In one embodiment, the lightpath is identified by the control burst ID value contained in Key column 1202. Since reservations for a given lightpath are made in response to the same control burst, the control burst ID for the control burst may be used to link the resource reservation records stored at the nodes along the lightpath together. The resource reservation records containing the identified lightpaths (e.g., lightpath ID's) are then cancelled at the detecting node, releasing the corresponding resources.

The operations performed at each next hop are shown in the lower portion of the flowchart delineated by start and end loop blocks 1710 and 1720. These operations are similar to those performed at the detecting node. First, in a block 1712, resource reservation records are retrieved from the resource reservation table at the current node based on the lightpath ID's. The resource reservation records are then grouped by corresponding next hops in a block 1714. The resource cancellation message is then sent to the next hop(s), as applicable, in a block 1716. The resource reservation records containing the lightpath BD's are then cancelled in a block 1718. This process is repeated until the final nodes along the lightpaths (e.g., an ingress or egress node) are reached. Switching Node Architecture

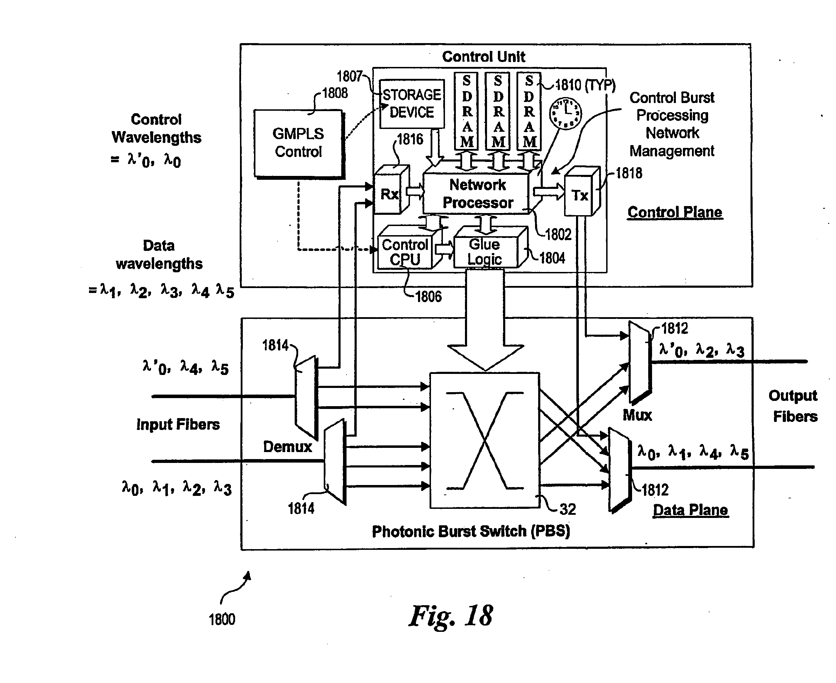

A simplified block diagram 1800 of a PBS switching node architecture in accordance with one embodiment is shown in Figure 18. The intelligent switching node architecture is logically divided into control plane components and data plane. The control plane includes a control unit 37 employing a network processor (NP) 1802, coupled to glue logic 1804 and a control processor (CPU) 1806 that runs software components to perform the GMPLS control operations 1808 disclosed herein. Network processor 1802 is also coupled to one or more banks of SDRAM (synchronous dynamic random access memory) memory 1810. The data plane architecture comprises a non-blocking optical switch fabric including a PBS 32 coupled optical multiplexers 1812, demultiplexers 1814, and optical transceivers (as depicted by a receive (Rx) block 1816 and a transmit (Tx) block 1818).

The burst assembly and framing, burst scheduling and control, which are part of the PBS MAC layer and related tasks are performed by network processor 1802. Network processors are very powerful processors with flexible micro-architecture that are suitable to support wide-range of packet processing tasks, including classification, metering, policing, congestion avoidance, and traffic scheduling. For example, the Intel® IXP2800 NP, which has 16 microengines, can support the execution of up to 1493 microengines instructions per packet at packet rate of 15 million packets per second for 10 GbE and a clock rate of 1.4 GHz.

In one embodiment, the optical switch fabric has strictly non-blocking space-division architecture with fast (< 100 ns) switching times and with limited number of input/output ports (*e.g*., ≈ 8x8, 12x12). Each of the incoming or outgoing fiber links typically carries only one data burst wavelength. The switch fabric, which has no or limited optical buffering fabric, performs statistical burst switching within a variable-duration time slot between the input and output ports. The PBS network can operate with a relatively small number of control wavelengths (λ'₀, λ₀), since they can be shared among many data wavelengths. Furthermore, the PBS switch fabric can also operate with a single wavelength and multiple fiber; however, further details of this implementation are not disclosed herein.

The control bursts can be sent either in-band (IB) or out of band (OOB) on separate optical channels. For the OOB case, the optical data bursts are statistically switched at a given wavelength between the input and output ports within a variable time duration by the PBS fabric based on the reserved switch configuration as set dynamically by network processor 1802. NP 1802 is responsible to extract the routing information from the incoming control bursts, providing fix-duration reservation of the PBS switch resources for the requested data bursts, and forming the new outgoing control bursts for the next PBS switching node on the path to the egress node. In addition, the network processor provides overall PBS network management functionality based on then extended GMPLS framework discussed above. For the IB case, both the control and data bursts are transmitted to the PBS switch fabric and control interface unit. However, NP 1802 ignores the incoming data bursts based on the burst payload header information. Similarly, the transmitted control bursts are ignored at the PBS fabric since the switch configuration has not been reserved for them. One advantage of this approach is that it is simpler and cost less to implement since it reduces the number of required wavelengths.

Embodiments of method and apparatus for implementing a photonic burst switching network are described herein. In the above description, numerous specific details are set forth to provide a thorough understanding of embodiments of the invention. One skilled in the relevant art will recognize, however, that embodiments of the invention can be practiced without one or more of the specific details, or with other methods, components, materials, etc. In other instances, well-known structures, materials, or operations are not shown or described in detail to avoid obscuring this description.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable optical manner in one or more embodiments.

Thus, embodiments of this invention may be used as or to support software program executed upon some form of processing core (such as the CPU of a computer or a processor of a module) or otherwise implemented or realized upon or within a machine-readable medium. A machine-readable medium includes any mechanism for storing or transmitting information in a form readable by a machine (*e.g*., a computer). For example, a machine-readable medium can include such as a read only memory (ROM); a random access memory (RAM); a magnetic disk storage media; an optical storage media; and a flash memory device, etc. In addition, a machine-readable medium can include propagated signals such as electrical, optical, acoustical or other form of propagated signals (*e.g*., carrier waves, infrared signals, digital signals, *etc.*).

In the foregoing specification, embodiments of the invention have been described. It will, however, be evident that various modifications and changes may be made thereto without departing from the scope as set forth in the appended claims. The specification and drawings are, accordingly, to be regarded in an illustrative rather than a restrictive sense.

## Claims

1. A switching node apparatus for use in an optical burst-switched network (1000), comprising:
optical switch fabric (32), having at least one input fiber port and at least one output fiber port; and
a control unit, operatively coupled to control the optical switch fabric, including at least one processor (1802) and a storage device (1807) operatively coupled to said at least one processor containing machine-executable instructions, which when executed by said at least one processor perform operations, **characterised by**:
receiving a resource reservation request to reserve a bandwidth resource provided by the switching node apparatus, said resource reservation relating to a portion of a lightpath comprising a plurality of lightpath segments coupled between network nodes (15, 17, 18; 1-7, A-F), including incoming and outgoing lightpath segments (1034, 1036, 1040, 1042, 1044) coupled to an input and an output port of the switching node apparatus, respectively;
reserving (22; 1102) the bandwidth resource;
detecting (1104) an unavailability of the reserved bandwidth resource, comprising detecting a traffic contention that limits access to the reserved resource;
generating (1106) a resource cancellation message;
sending (1108) the resource cancellation message to at least one network node along the lightpath; and
canceling (1110) any resource reservations identified by the resource cancellation message.

2. The apparatus of claim 1, where the optical burst-switched network is a mesh-architecture optical network (1000).

3. The apparatus of claim 1, further comprising at least one input port to link in communication with one or more edge nodes (A-F) of the optical burst-switched network.

4. The apparatus of claim 1, wherein the optical burst-switched network comprises a photonic burst switched, PBS, network.

5. The apparatus of claim 4, wherein the optical burst-switched network comprises a wavelength-division multiplexed, WDM, PBS network; and the optical switching fabric provides switching of optical signals comprising different wavelengths carried over common fibers that may be respectively coupled to said at least one input fiber port and said at least one output fiber port.

6. The apparatus of claim 4, wherein the resource reservation request is sent via a PBS control burst, and the resource cancellation message is included as part of a resource cancellation control burst having a format similar to the PBS control burst.

7. The apparatus of claim 1, wherein reserving (1102) the bandwidth resource comprises storing resource reservation data in a resource reservation table.

8. The apparatus of claim 1, wherein detecting (1104) an unavailability of the reserved resource comprises detecting one of a failure of the switching node apparatus or failure of one of the incoming and outgoing fiber links.

9. The apparatus of claim 1, wherein the resource cancellation message is sent (1108) to a network node that is downstream from the switching node apparatus.

10. The apparatus of claim 1, wherein the resource cancellation message is sent (1108) to a network node that is upstream from the switching node apparatus.

11. A method, comprising:
reserving (1102), via corresponding resource reservations, network resources at respective network nodes of an optical burst switched network, said network nodes are coupled via lightpath segments comprising a lightpath for which the network resources are reserved;
detecting (1104) an unavailability of a network resource along the lightpath, comprising detecting a traffic contention that limits access to the reserved resource;
generating (1106) a resource cancellation message identifying network resources that may be released;
sending (1108) the resource cancellation message to at least one network node along the lightpath; and
canceling (1110) any resource reservations identified by the resource cancellation message for said at least one network node.

12. The method of claim 11, where the optical burst switched network is a mesh-architecture optical network (1000).

13. The method of claim 11, where one or more edge nodes (A-F) are directly connected to at least one switching node (1-7) of the optical burst switched network.

14. The method of claim 11, wherein the optical burst switched network comprises a photonic burst-switched , PBS, network.

15. The method of claim 14, wherein the optical-switched network comprises a wavelength-division multiplexed, WDM, PBS network.

16. The method of claim 14, wherein the resource reservation request is sent via a PBS control burst, and the resource cancellation message is included as part of a resource cancellation control burst having a format similar to the PBS control burst.

17. The method of claim 14, wherein each node is responsible for managing its own resource cancellation messages and releasing its resources.

18. The method of claim 14, wherein the unavailability of the network resource is detected (1104) at a given network node, and the resource cancellation message is sent (1108) to all network nodes that are upstream along the lightpath from said given network node.

19. The method of claim 14, wherein the unavailability of the network resource is detected (1104) at a given network node, and the resource cancellation message is sent (1108) to all network nodes that are downstream along the lightpath from said given network node.

20. The method of claim 14, wherein the unavailability of the network resource is detected (1104) at a given network node, and the resource cancellation message is sent (1108) to all other network nodes that are along the lightpath.

21. The method of claim 14, wherein the resource cancellation message is generated (1106) at a given network node for which the unavailability of the network resource is detected.

22. The method of claim 14, wherein reserving the network resource comprises storing resource reservation data in a resource reservation table, and wherein canceling the resource reservation comprises one of deleting or invalidating a record in the resource reservation table corresponding to the resource reservation.

23. The method of claim 14, wherein detecting (1104) an unavailability of the reserved network resource comprises detecting one of a failure of the switching node apparatus or failure of one of the incoming and outgoing fiber links.

24. The method of claim 14, wherein the resource cancellation message contains data identifying a type of resource unavailability that is detected.

25. The method of claim 14, wherein the resource cancellation message contains data identifying the node at which the resource unavailability was detected.

26. The method of claim 14, wherein the resource cancellation message contains data identifying at least one label corresponding to one or more resource reservations that are to be cancelled.

27. The method of claim 14, wherein the resource cancellation message contains data identifying a lightpath for which resource reservations are to be cancelled.

28. The method of claim 27, wherein the data identifying the lightpath for which resource reservations are to be cancelled (1110) comprises a burst identifier (ID) that matches a control burst ID corresponding to a control burst that was employed to make the resource reservations.

29. A machine-readable medium to provide instructions, which when executed by a processor performs all the steps of any of claims 11 to 28.

## Patentansprüche

1. Schaltknotenvorrichtung zum Einsatz in einem Netz mit optischer Burstvermittlung (1000), wobei die Vorrichtung folgendes umfasst:
eine optische Switch Fabric (32) mit mindestens einem Eingangs-Lichtwellenleiter-Anschluss und mindestens einem Ausgangs-Lichtwellenleiter-Anschluss; und
eine Steuereinheit, die operativ so gekoppelt ist, dass sie die optische Switch Fabric steuert, mit mindestens einem Prozessor (1802) und einer Speichervorrichtung (1807), die operativ mit dem genannten mindestens einen Prozessor gekoppelt ist, der maschinenausführbare Anweisungen aufwiest, die bei einer Ausführung durch den genannten mindestens einen Prozessor Operationen ausrühren, **gekennzeichnet durch**:
das Empfangen einer Ressourcenreservierungs-Anforderung zur Reservierung einer durch die Schaltknotenvorrichtung bereitgestellten Bandbreitenressource, wobei sich die genannte Ressaurcenreservierung auf einen Teil eines Lichtpfads bezieht, der eine Mehrzahl von Lichtpfadsegmenten umfasst, die zwischen Netzwerkknoten (15, 17, 18; 1-7, A-F) gekoppelt sind, mit eingehenden und ausgehenden Lichtpfadsegmenten (1034, 1036, 1040, 1042, 1044), die entsprechend mit einem Eingangs- und einem Ausgangsanschluss der Schaltknotenvorrichtung gekoppelt sind;
das Reservieren (22; 1102) der Bandbreitenressource;
das Detektieren (1104) einer Unverfügbarkeit der reservierten Bandbreiteriressource, wobei dies das Detektieren eines Verkehtskonflikts umfasst, der den Zugriff auf die reservierten Ressource beschränkt;
das Erzeugen (1106) einer Ressourcenaufhebungsnachricht;
das Senden (1108) der Ressourcenaufhebungsnachricht an mindestens einen Netzwerkknoten entlang dem Lichtpfad; und
das Aufheben (1110) jeglicher Ressourcenreservierungen **durch** die Ressourcenaufhebungsnaclwicht.

2. Vorrichtung nach Anspruch 1, wobei es sich bei dem Netz mit optischer Burstvermittlung um ein optisches Netz mit Maschenarchitektur (1000) handelt.

3. Vorrichtung nach Anspruch 1, wobei diese ferner mindestens einen Eingangsanschluss für eine Kommunikationsverbindung mit einem oder mehreren Randknoten (A-F) des Netzes mit optischer Burstvermittlung umfasst.

4. Vorrichtung nach Anspruch 1, wobei das Netz mit optischer Burstvermittlung ein Netz mit photonischer Burstvermittlung (PBS) umfasst,

5. Vorrichtung nach Anspruch 1, wobei das Netz mit optischer Burstvermittlung ein Wellenlängenmultiplex(WDM)-PBS-Netz umfasst; und wobei die optische Switching Fabric das Schalten von optischen Signalen umfasst, die verschiedene Wellenlängen umfassen, die über gemeinsame Lichtwellenleiter übertragen werden, die entsprechend mit dem genannten mindestens einen Eingangs-Lichtwellenleiter-Anschluss und dem genannten mindestens einen Ausgangs-Lichtwellenleiter-Anschluss gekoppelt sein können.

6. Vorrichtung nach Anspruch 4, wobei die Ressourcenreservierungs-Anforderung über einen PBS-Steuer-Burst übermittelt wird, und wobei die Ressourcenaufllebungsnachricht als Teil eines Ressourcenaufliebungs-Steuer-Bursts mit einem Format, das dem Format des PBS-Steuer-Bursts ähnlich ist, enthalten ist.

7. Vorrichtung nach Anspruch 1, wobei das Reservieren (1102) der Bandbreitenressource das Speichern von Ressourcenreservierungsdaten in einer Ressourcenreservierungstabelle umfasst.

8. Vorrichtung nach Anspruch 1, wobei das Detektieren (1104) einer Unverfügbarkeit der reservierten Ressource das Detektieren eines Fehlers der Schaltknotenvorrichtung oder eines Fehlers der eingehenden und abgehenden Lichtwellenleiterverbindungen umfasst.

9. Vorrichtung nach Anspruch 1, wobei die Ressourcenaufhebungsnachricht an einen Netzwerkknoten übermittelt wird (1108), der stromabwärts der Schaltknotenvorrichtung angeordnet ist.

10. Vorrichtung nach Anspruch 1, wobei die Ressourcenaufhebungsnachricht an einen Netzwerkknoten übermittelt wird (1108), der stromaufwärts der Schaltknotenvorrichtung angeordnet ist.

11. Verfahren, das folgendes umfasst:
das Reservieren (1102) über entsprechende Ressourcenreservierungen von Netzressourcen an entsprechenden Netzwerkknoten eines Netzes mit optischer Burstvermittlung, wobei die genannten Netzwerkknoten über Lichtpfadsegmente gekoppelt sind, die einen Lichtpfad umfassen, für den die Netzressourcen reserviert sind;
das Detektieren (1104) einer Unverfügbarkeit einer Netzressource entlang dem Lichtpfad, wobei dies das Detektieren eines Verkehrskonflikts umfasst, der den Zugriff auf die reservierten Ressource begrenzt;
das Erzeugen (1106) einer Ressourcenaufhebungsnachricht, welche Netzressourcen identifiziert, die freigegeben werden können;
das Senden (1108) der Ressourcenaufhebungsnachricht an mindestens einen Netzwerkknoten entlang des Lichtpfads; und
das Aufheben (1110) aller etwaigen Ressourcenreservierungen, die durch die Ressourcenaufhebungsnachricht für den genannten mindestens einen Netzwerkknoten identifiziert werden.

12. Verfahren nach Anspruch 11, wobei es sich bei dem Netz mit optischer Burstvermittlung um ein optisches Netz mit Maschenarchitektur (1000) handelt.

13. Verfahren nach Anspruch 11, wobei ein oder mehrere Randknoten (A-F) direkt mit mindestens einem Schaltknoten (1-7) des Netzes mit optischer Burstvermittlung verbunden sind.

14. Verfahren nach Anspruch 11, wobei das Netz mit optischer Burstvermittlung ein Netz mit photonischer Burstvermittlung (PBS) umfasst.

15. Verfahren nach Anspruch 14, wobei das Netz mit optischer Burstvermittlung ein Wellenlangenmultiplex(WDM)-PBS-Netz umfasst.

16. Verfahren nach Anspruch 14, wobei die Ressourcenreservierungs-Anforderung über einen PBS-Steuer-Burst übermittelt wird, und wobei die Ressourcenaufhebungsnachricht als Teil eines Ressaurcenaufhebungs-Steuer-Bursts mit einem Format, das dem Format des PBS-Steuer-Bursts ähnlich ist, enthalten ist.

17. Verfahren nach Anspruch 14, wobei jeder Knoten für die Verwaltung seiner eigenen Ressourcenaufhebungsnachrichten und die Freigabe seiner Ressourcen zuständig ist.

18. Verfahren nach Anspruch 14, wobei die Unverfügbarkeit der Netzressource an einem bestimmten Netzwerkknoten detektiert wird (1104), und wobei die Ressourcenaufhebungsnachricht an alle Netzwerkknoten übermittelt wird (1108), die stromaufwärts entlang dem Lichtpfad von dem genannten Netzwerkknoten angeordnet sind.

19. Verfahren nach Anspruch 14, wobei die Unverfügbarkeit der Netzressource an einem bestimmten Netzwerkknoten detektiert wird (1104), und wobei die Ressourcenaufhebungsnachricht an alle anderen Netzwerkknoten übermittelt wird (1108), die stromabwärts entlang dem Lichtpfad von dem genannten Netzwerkknoten angeordnet sind.

20. Verfahren nach Anspruch 14, wobei die Unverfügbarkeit der Netzressource an einem bestimmten Netzwerkknoten detektiert wird (1104), und wobei die Ressourcenaufhebungsnachricht an alle anderen Netzwerkknoten übermittelt wird (1108), die entlang dem Lichtpfad angeordnet sind.

21. Verfahren nach Anspruch 14, wobei die Ressourcenaufhebungsnachricht an einem bestimmten Netzwerkknoten erzeugt wird (1106), für den die Unverfügbarkeit der Netzwerkressource detektiert wird.

22. Verfahren nach Anspruch 14, wobei das Reservieren der Netzressource das Speichern von Ressourcenreservierungsdaten in einer Ressourcenreservierungstabelle umfasst, und wobei das Aufheben der Ressourceineservierung das Löschen oder Invalidieren eines Datensatzes in der Ressourcenreservierungstabelle entsprechend der Ressourcenreservierung umfasst.

23. Verfahren nach Anspruch 14, wobei das Detektieren (1104) einer Unverfügbarkeit der reservierten Netzressource das Detektieren eines Fehlers der Schaltknotenvorrichtung oder eines Fehlers einer der eingehenden und ausgehenden Lichtwellenleiterverbindungen umfasst.

24. Verfahren nach Anspruch 14, wobei die Ressourcenaufhebungsnachricht Daten enthält, welche einen Typ der detektierten Ressourcenunverfügbarkeit identifizieren.

25. Verfahren nach Anspruch 14, wobei die Ressourcenaufhebungsnachricht Daten enthält, welche den Knoten identifizieren, an dem die Ressourcenunverfügbarkeit detektiert worden ist.

26. Verfahren nach Anspruch 14, wobei die Ressourcenaufhebungsnachricht Daten enthält, welche mindestens einen Kennsatz identifizieren, der einer oder mehreren Ressourcenreservierungen entspricht, die aufgehoben werden sollen.

27. Verfahren nach Anspruch 14, wobei die Ressourcenaufhebungsnachricht Daten enthält, welche einen Lichtpfad identifizieren, für den Ressourcenreservierungen aufgehoben werden sollen.

28. Verfahren nach Anspruch 27, wobei die Daten, welche den Lichtpfad identifizieren, für den Ressourcenreservierungen aufgehoben werden sollen (1110), einen Burst-Bezeichner (ID) umfassen, der einer Steuer-Burst-ID entspricht, die einem Steuer-Burst entspricht, der für die Vornahme de Ressourcenreservierungen eingesetzt worden ist.

29. Maschinenlesbares Medium zum Bereitstellen von Anweisungen, die bei einer Ausführung durch einen Prozessor alle Schritte der Ansprüche 11 bis 28 ausführen,

## Revendications

1. Appareil de noeud de commutation à utiliser dans un réseau optique à commutation de rafales (1000), comprenant :
une matrice de commutation optique (32), ayant au moins un port à fibres d'entrée et au moins un port à fibres de sortie ; et
une unité de commande, couplée de manière opérationnelle pour commander la matrice de commutation optique, y compris au moins un processeur (1802) et un dispositif de stockage (1807) couplé de manière opérationnelle audit au moins un processeur contenant des instructions exécutables par machine qui, lorsqu'elles sont exécutées par ledit au moins un processeur, effectuent des opérations, **caractérisé par** ;
la réception d'une demande de réservation de ressource pour réserver une ressource de bande passante fournie par l'appareil de noeud de commutation, ladite réservation de ressource concernant une partie d'un chemin optique comprenant une pluralité de segments de chemin optique couplés entre les noeuds de réseau (15, 17, 18 ; 1-7, A-F), y compris des segments de chemin optique entrants et sortants (1034,1036, 1040, 1042, 1044) couplés à un port d'entrée et de sortie de l'appareil de noeud de commutation, respectivement ;
la réservation (22; 1102) de la ressource de bande passante ;
la détection (1104) d'une indisponibilité de la ressource de bande passante réservée, comprenant la détection d'une contention du trafic qui limite l'accès à la ressource réservée ;
la génération (1106) d'un message d'annulation de ressource ;
l'envoi (1108) du message d'annulation de ressource à au moins un noeud de réseau le long du chemin optique ; et
l'annulation (1110) de toute réservation de ressource identifiée par le message d'annulation de ressource.

2. Appareil selon la revendication 1, dans lequel le réseau optique à commutation de rafales est un réseau optique à architecture maillée (1000).

3. Appareil selon la revendication 1, comprenant en outre au moins un port d'entrée pour assurer la liaison en communication avec un ou plusieurs noeuds de périphérie (A-F) du réseau optique à commutation de rafales.

4. Appareil selon la revendication 1, dans lequel le réseau optique à commutation de rafales comprend un réseau photonique à commutation de rafales (en anglais « Photonic Burst Switched » - PBS).

5. Appareil selon la revendication 4, dans lequel le réseau optique à commutation de rafales comprend un réseau PBS à multiplexage par répartition en longueur d'onde, MRL ; et la matrice de commutation optique assure la commutation des signaux optiques comprenant différentes longueurs d'onde portées sur des fibres communes qui peuvent être couplées respectivement audit au moins un port à fibres d'entrée et audit au moins un port à fibres de sortie.

6. Appareil selon la revendication 4, dans lequel la demande de réservation de ressource est envoyée via une rafale de commande PBS, et le message d'annulation de ressource est inclus à une rafale de commande d'annulation de ressource ayant un format similaire à la rafale de commande PBS.

7. Appareil selon la revendication 1, dans lequel la réservation (1102) de la ressource de bande passante comprend le stockage de données de réservation de ressource dans un tableau de réservation de ressource.

8. Appareil selon la revendication 1, dans lequel la détection (1104) d'une indisponibilité de la ressource réservée comprend la détection de l'une d'une défaillance de l'appareil de noeud de commutation ou d'une défaillance de l'une des liaisons de fibres entrantes et sortantes.

9. Appareil selon la revendication 1, dans lequel le message d'annulation de ressource est envoyé (1108) à un noeud de réseau qui est en aval de l'appareil de noeud de commutation.

10. Appareil selon la revendication 1, dans lequel le message d'annulation de ressource est envoyé (1108) à un noeud de réseau qui est en amont de l'appareil de noeud de commutation.

11. Procédé, comprenant les étapes consistant à ;
réserver (1102), via les réservations de ressource correspondantes, des ressources de réseau à des noeuds de réseau respectifs d'un réseau optique à commutation de rafales, lesdits noeuds de réseau étant couplés via des segments de chemin optique comprenant un chemin optique pour lequel les ressources de réseau sont réservées ;
détecter (1104) une indisponibilité d'une ressource de réseau le long du chemin optique, comprenant la détection d'une contention du trafic qui limite l'accès à la ressource réservée ;
générer (1106) un message d'annulation de ressource identifiant les ressources de réseau qui peuvent être libérées ;
envoyer (1108) le message d'annulation de ressource à au moins un noeud de réseau le long du chemin optique ; et
annuler (1110) toute réservation de ressource identifiée par le message d'annulation de ressource pour ledit au moins un noeud de réseau.

12. Procédé selon la revendication 11, dans lequel le réseau optique à commutation de rafales est un réseau optique à architecture maillée (1000).

13. Procédé selon la revendication 11, dans lequel un ou plusieurs noeuds de périphérie (A-F) sont directement connectés à au moins un noeud de commutation (1-7) du réseau optique à commutation de rafales.

14. Procédé selon la revendication 11, dans lequel le réseau optique à commutation de rafales comprend un réseau photonique à commutation de rafales (en anglais « Photonic Burst Switched » - PBS).

15. Procédé selon la revendication 14, dans lequel le réseau optique à commutation de rafales comprend un réseau PBS à multiplexage par répartition en longueur d'onde, MRL,

16. Procédé selon la revendication 14, dans lequel la demande de réservation de ressource est envoyée via une rafale de commande PBS, et le message d'annulation de ressource est inclus à une rafale de commande d'annulation de ressource ayant un format similaire à la rafale de commande PBS.

17. Procédé selon la revendication 14, dans lequel chaque noeud est responsable de gérer ses propres messages d'annulation de ressource et de libérer ses ressources.

18. Procédé selon la revendication 14, dans lequel l'indisponibilité de la ressource de réseau est détectée (1104) à un noeud de réseau donné, et le message d'annulation de ressource est envoyé (1108) à tous les noeuds de réseau qui sont en amont le long du chemin optique à partir dudit noeud de réseau donné.

19. Procédé selon la revendication 14, dans lequel l'indisponibilité de la ressource de réseau est détectée (1104) à un noeud de réseau donné, et le message d'annulation de ressource est envoyé (1108) à tous les noeuds de réseau qui sont en aval le long du chemin optique à partir dudit noeud de réseau donné.

20. Procédé selon la revendication 14, dans lequel l'indisponibilité de la ressource de réseau est détectée (1104) à un noeud de réseau donné, et le message d'annulation de ressource est envoyé (1105) à tous les autres noeuds de réseau qui sont le long du chemin optique.

21. Procédé selon la revendication 14, dans lequel le message d'annulation de ressource est généré (1106) à un noeud de réseau donné pour lequel l'indisponibilité de la ressource de réseau est détectée.

22. Procédé selon la revendication 14, dans lequel la réservation de la ressource de réseau comprend l'étape consistant à stocker des données de réservation de ressource dans un tableau de réservation de ressource, et dans lequel l'annulation de la réservation de ressource comprend l'étape consistant à supprimer ou invalider un enregistrement dans la table de réservation de ressource correspondant à la réservation de ressource.

23. Procédé selon la revendication 14, dans lequel la détection (1104) d'une indisponibilité de la ressource de réseau réservée comprend l'étape consistant à détecter l'une d'une défaillance de l'appareil de noeud de commutation ou d'une défaillance de l'une des liaisons de fibres entrantes et sortantes.

24. Procédé selon la revendication 14, dans lequel le message d'annulation de ressource contient des données identifiant un type d'indisponibilité de ressource qui est détecté,

25. Procédé selon la revendication 14, dans lequel le message d'annulation de ressource contient des données identifiant le noeud auquel l'indisponibilité de ressource a été détectée.

26. Procédé selon la revendication 14, dans lequel le message d'annulation de ressource contient des données identifiant au moins une étiquette correspondant à une ou plusieurs réservations de ressource à annuler.

27. Procédé selon la revendication 14, dans lequel le message d'annulation de ressource contient des données identifiant un chemin optique pour lequel les réservations de ressource doivent être annulées.

28. Procédé selon la revendication 27, dans lequel les données identifiant le chemin optique pour lequel les réservations de ressource doivent être annulées (1110) comprennent un identificateur de rafale (ID) qui correspond à un ID de rafale de commande correspondant à une rafale de commande qui a été utilisée pour faire les réservations de ressource.

29. Support lisible par machine pour fournir des instructions qui, lorsqu'elles sont exécutées par un processeur, effectuent toutes les étapes de l'une quelconque des revendications 11 à 28.
